# EUROPÄISCHE PATENTSCHRIFT

(11) **EP 1 165 283 B1**
(45) Veröffentlichungstag und Bekanntmachung des Hinweises auf die Patenterteilung: **11.09.2002**
(21) Anmeldenummer: 00907477.4
(22) Anmeldetag: 14.01.2000
(51) Int. Cl.: B23P 19/06, B21J 15/02, F16B 19/05

(54) **FUNKTIONSTRÄGERANORDNUNG**
SUPPORT SYSTEM FOR FUNCTIONAL UNIT
SYSTEME DE SUPPORT FONCTIONNEL

(30) Priorität: 08.02.1999 DE 19905041
(43) Veröffentlichungstag der Anmeldung: 02.01.2002
(73) Patentinhaber: Profil Verbindungstechnik GmbH & Co. KG, 61381 Friedrichsdorf (DE)
(72) Erfinder: HUMPERT, Richard, D-61191 Rosbach v.d. Höhe (DE); BABEJ, Jiri, D-35423 Lich (DE)
(74) Vertreter: Manitz, Finsterwald & Partner GbR
(86) Internationale Anmeldenummer: EP0000271
(87) Internationale Veröffentlichungsnummer: WO00047363

(56) Entgegenhaltungen:
- EP-A- 0 113 308
- EP-A- 0 842 733
- GB-A- 545 367
- US-A- 4 212 224

## Beschreibung

Die vorliegende Erfindung betrifft einen einseitig in ein Bauteil, beispielsweise ein Blechteil oder ein Kunststoffteil einsetzbaren Funktionsträger, bestehend aus einem Funktionselement mit Schaft- und Kopfteil und einer Niethülse entsprechend Anspruch 1 sowie ein Zusammenbauteil entsprechend Anspruch 20, bestehend aus einem Bauteil mit einem solchen Funktionsträger und ein Verfahren entsprechend Anspruch 23 und Werkzeug entsprechend Anspruch 30 zum Einsetzen eines solchen Funktionsträgers.

Zum Stand der Technik wird auf die Broschüre "Nietsysteme - Verbindungen mit Zukunft" von W. Clemens und O. Hahn verwiesen, herausgegeben durch die Herausgebergemeinschaft: Interessengemeinschaft Formtechnisches Fügen und Laboratorium für Werkstoff- und Fügetechnik der Universität Paderborn, 1. Auflage 1994.

Diese Broschüre gibt eine ausführliche Übersicht über verschiedene Nietsysteme, darunter folgende:
1. Blindniete
2. Schließringbolzen
3. Blindnietmuttern und -bolzen
4. Nietmuttern und -bolzen.

Wie allgemein bekannt, besteht ein Blindniet aus einer Niethülse, die mit einem Zugdorn versehen ist. Der Niet ist von einer Seite in ein Bohrloch einsetzbar, das sich üblicherweise durch zwei miteinander zu vernietenden, plattenförmigen Bauteilen, üblicherweise Blechteilen, hindurch erstreckt. Sie werden mit einem geeigneten Werkzeug von einer Seite verarbeitet. Durch die Ausübung einer Zugbewegung auf den Dorn bewirkt ein Kopfteil des Dorns die Aufweitung der Niethülse auf der dem Werkzeug abgewandten Seite der zwei Blechteile, wodurch die Niethülse umgeformt wird, und bewirkt gleichzeitig ein festes Zusammenpressen der zu verbindenden Werkstücke. Beim Erreichen einer vorbestimmten axialen Spannung bricht der Dorn an einer Sollbruchstelle, üblicherweise im Bereich des Kopfteils. Die zwei plattenförmigen Bauteile werden permanent zusammengehalten vom im wesentlichen rohrförmigen Blindniet, dessen beiden Enden radial über das Bohrloch hinaus stehen.

Es handelt sich hier also um eine reine Nietverbindung mit im Prinzip der Funktion, die zwei plattenförmigen Bauteile aneinander zu halten.

Sogenannte Schließringbolzen bestehen aus einem bolzenartigen Element mit einem Kopfteil und einem Schaftteil und einem Schließring, der über den Schaftteil des Bolzens in axialer Richtung bewegbar ist.

Solche Schließringbolzen dienen auch zur Verbindung von beispielsweise zwei plattenförmigen Bauteilen, wozu - nach der Fertigstellung eines die beiden Blechteile durchdringenden Bohrloches - das Bolzenelement von einer Seite durch die zwei zu verbindenden, plattenförmigen Bauteile hindurchgeführt wird, der Schließring von der anderen Seite der plattenförmigen Bauteile über den Schaftteil des Bolzenelementes gesetzt wird und mit einem Setzwerkzeug einerseits in Richtung auf das Kopfteil des Bolzenelementes zu gedrückt wird, wobei die zwei plattenförmigen Bauteile gleichzeitig aneinander gepreßt werden und andererseits der Schließring radial nach innen plastisch verformt wird, so daß der Schließring in förmschlüssiger Verbindung mit kreisförmigen Rillen am Schaftteil des Bolzens gerät. Während der Schließring in Richtung auf den Kopfteil des Bolzens zu gedrückt wird, wird der Schaftteil gleichzeitig gezogen. Die Setzbewegung ist erst dann zu Ende geführt, wenn das Schaftteil an einer Sollbruchstelle bricht, die üblicherweise unmittelbar an dem dem Kopfteil des Bolzens abgewandten Stimende des Schließrings angeordnet ist. Auch hier entsteht eine permanent vernietete Verbindung. Der Schließringbolzen hat keine darüber hinausgehende Funktion.

Die sogenannten Blindnietmuttern und -bolzen sind Gewindeträger, die die Funtion eines Blindniets und einer Mutter bzw. eines Bolzens erfüllen. Sie bestehen aus einer Niethülse, die in einem axialen Bereich mit einem Muttergewinde versehen ist, oder aus einer Niethülse, die in einem Bereich formschlüssig mit einem ein Schraubengewinde aufweisendem Schaftteil verbunden ist. Die Niethülse wird auf einen Zugdorn angeschraubt und in ein Bohrloch von einer Seite eingesetzt. Durch Anziehen des Zugdornes wird ein gewindeloser Teil der Blindnietmutter radial gestaucht, so daß die Hülse in einem oder mehreren plattenförmigen Bauteilen fest vernietet ist. Der Zugdorn wird anschließend aus dem Blindniet herausgeschraubt. Es kann dann ein Bolzenelement in das Gewindeteil der Blindnietmutter hineingeschraubt werden, wodurch ein anderes Bauteil an das plattenförmige Bauteil oder an die plattenförmigen Bauteile angebracht werden kann, mit dem bzw. denen die Blindnietmutter vernietet ist. Bei einem Blindnietbolzen dient der mit Gewinde versehene Schaftteil des Blindnietbolzens, d.h. das Bolzenteil, als Zugdorn. Solche Blindnietmuttern und -bolzen haben den Vorteil, daß sie einseitig einsetzbar sind und nicht nur eine Nietfunktion haben, sondern auch als Funktionsträger dienen. Problematisch ist aber, daß die Festigkeitsklasse der Verbindung beschränkt ist, denn bei einer Blindnietmutter wird das Gewinde in der Niethülse versehen. Diese muß axial verformbar sein, um die Durchführung der Nietverbindung zu erlauben. Bei einem Blindnietbolzen muß der Bolzenteil mit der verformbaren Niethülse verbunden werden. Die Festigkeit dieser Verbindung ist schließlich für die Festigkeit der gesamten Verbindung maßgeblich. In beiden Fällen bestimmt also die Festigkeit der verformbaren Niethülse im Prinzip die Festigkeit der sich ergebenden Verbindung zu einem weiteren Bauteil.

Bei Nietmuttern und Bolzen handelt es sich um Befestigungselemente, die üblicherweise mit einem plattenförmigen Bauteil vernietet werden und entweder als Nietmuttern mit einem Innengewinde für die Anbringung eines weiteren Bauteils mittels eines Bolzenelements, oder als Bolzenelement mit einem Außengewinde für die Anbringung eines weiteren Bauteils mittels einer Mutter realisiert sind. Nietmuttern und -bolzen ermöglichen hochfeste Verbindungen, setzen aber voraus, daß das plattenförmige Bauteil von beiden Seiten zugänglich ist, denn das Setzen der Nietmuttern und Nietbolzen macht die Anwendung einer Matrize auf der einen Seite des Blechteils und eines Stempels auf der anderen Seite des Blechteils erforderlich.

Nietmuttern und -bolzen werden häufig in Blechteile gleichzeitig bei der Formgebung der Blechteile in einer Presse eingesetzt. Die Blechteile werden dann häufig zu kastenförmigen Bauteilen zusammengesetzt bzw.geschweißt, beispielsweise zu den Schwellen, Türen oder Säulen einer PKW-Karosserie.

Sollte im Laufe der Zeit oder reparaturbedingt die Verbindung zwischen der Nietmutter und dem Blechteil bzw. dem Nietbolzen und dem Blechteil versagen oder ersetzt werden müssen, so gestaltet dies sich als schwierig, da man nunmehr keinen Zugang zu beiden Seiten des entsprechenden Blechteils hat. Die Anwendung eines anzuschweißenden Mutter- oder Bolzenelements ist vielfach nicht möglich oder zulässig, beispielsweise bei Aluminiumkarosserien oder bei hochfesten Blechteilen oder bei sogenannten Verbundblechteilen mit Kunststoffmembranen. Es besteht also für solche Anwendungen die Notwendigkeit eines einseitig einbringbaren Funktionsträgers, beispielsweise Mutterelement oder Bolzenelement, das eine hochwertige, hochfeste Verbindung ermöglicht, d.h. ein Funktionsträger, der die Vorzüge der einseitigen Einsetzbarkeit von Blindnietmuttern und -bolzen mit den hochfesten Verbindungseigenschaften von Nietmuttern und -bolzen kombiniert.

Weiterhin gibt es Aufgaben, die mit den bekannten Nietelementen noch nicht oder nicht immer zufriedenstellend gelöst werden können, beispielsweise das Einsetzen von Funktionsträgern in Blindbohrlöchern in Kunststoff- oder Spanplatten.

Es ist daher die Aufgabe der vorliegenden Erfindung, einen Funktionsträger zu schaffen, der einerseits einseitig einsetzbar ist, andererseits aber auch hochfeste Verbindungen ermöglicht, wobei der Funktionsträger sowohl als Reparaturlösung im Karosseriebau und anderweitig, und andererseits als neuartiges Nietsystem dienen kann, wobei vorzugsweise die Anwendung in einem blinden Bohrloch auch möglich sein soll. Weiterhin soll der Funktionsträger mit Kräften einsetzbar werden, die von verhältnismäßig kleinen Werkzeugen aufgebracht werden können, so daß das Einsetzen selbst in Bereichen mit beengten Platzverhältnissen möglich ist.

Weiterhin gehört zur Aufgabe der Erfindung, ein Verfahren und ein Werkzeug zum Einsetzen eines entsprechenden Funktionsträgers zu schaffen.

Zur Lösung dieser Aufgabe zeichnet sich ein erfindungsgemäßer Funktionsträger dadurch aus, daß die Niethülse einen rohrförmigen, dem Kopfteil zugewandten verformbaren Bereich aufweist und in axialer Richtung des Schaftteils an diesem entlang bewegbar ist und daß das Funktionselement im Übergangsbereich zwischen dem Schaftteil und dem Kopfteil eine eine Gleitfläche zur Verformung der Niethülse bildende Hohlkehle aufweist, die den rohrförmigen verformbaren Bereich der Niethülse radial nach außen verformt.

Die Verformung der Niethülse ist hier erfindungsgemäß im Sinne der radialen Umlenkung des dem Kopfteil zugewandten Stirnendes der Niethülse zu verstehen.

Durch diese Ausbildung des erfindungsgemäßen Funktionsträgers wird der Außendurchmesser des Kopfteils des Funktionselements und des rohrförmigen Bereichs der Niethülse so gewählt, daß er zumindest im wesentlichen dem Innendurchmesser eines Bohrloches im entsprechenden plattenförmigen Bauteil entspricht oder vorzugsweise geringfügig kleiner als dieser ist, so daß der Punktionsträger bestehend aus Funktionselement und Niethülse von einer Seite in das Bohrloch hineingeführt werden kann. Anschließend wird durch die axiale Bewegung der Niethülse am Schaftteil des Funktionselementes entlang und durch die Verformung der Niethülse an der Hohlkehle die Niethülse radial nach außen verformt, so daß eine Durchmesservergrößerung der Niethülse stattfindet und die Niethülse dann für die notwendige Verankerung des Funktionsträgers an oder im plattenförmigen Bauteil sorgt.

Wird der Funktionsträger in ein blindes Bohrloch eingesetzt, wird das Stirnende der rohrförmigen Bereiche der Niethülse radial über den Durchmesser des Kopfteils hinaus verformt und greift in die Wandung des Bauteils hinein, wodurch der Funktionsträger nicht mehr aus dem blinden Bohrloch hinausgezogen werden kann. Die Bewegung des Funktionsträgers in die andere Richtung, d.h. weiter in das Bohrloch hinein, wird außerdem dadurch verhindert, daß der Kopiteil am Ende des Blindloches anstößt. Es kann sich bei dem Bauteil hier um ein massives Bauteil aus Kunststoff handeln, das in Form einer dicken Platte oder beispielsweise in Form eines massiven Teils oder eines Spritzgußstücks oder in Form eines anders geformten Teils vorliegt. Das Bauteil könnte auch aus anderen Materialien bestehen, beispielsweise aus Spanplattenmaterial.

Bei einem plattenförmigen Bauteil mit einem durchgehenden Bohrloch liegt der verformbare Bereich der Niethrülse nach der Verformung auf der der Einführseite abgewandten Seite des Bauteils und verhindert, daß der Funktionsträger von der Einführseite wieder aus dem plattenförmigen Bauteil herausgezogen werden kann. Durch die radial nach außen gerichtete Verformung der Niethülse kann auch der Funktionsträger an der Wandung des Bohrloches geklemmt werden. Dies ist aber in den meisten Fällen nicht ausreichend, um eine axiale Bewegung des Funktionsträgers weiter durch das plattenförmige Bauteil hindurch zu verhindern. Um diese Funktion zu erhalten, wird die Niethülse vorzugsweise an ihrem dem Kopfteil des Funktionselementes abgewandten Ende radial nach außen verformt, so daß die Niethülse schließlich eine ringförmige Nut bildet, in der das plattenförmige Bauteil oder eine ringförmige Wulst innerhalb des Bohrloches formschlüssig festgehalten wird. Alternativ hierzu konnte das dem Kopfteil des Funktionselementes abgewandten Ende der Niethülse ein Flanschteil aufweisen, das einen Durchmesser hat, der größer ist als der des Bohrloches. Auch auf diese Weise wird das plattenförmige Bauteil in eine ringförmige Nut zwischen dem verformten, rohrförmigen Bereich der Niethülse und dem Flanschteil formschlüssig aufgenommen.

Ein entscheidender Vorteil des erfindungsgemäßen Funktionsträgers liegt darin, daß bei Verwendung eines Funktionselementes in Form eines Befestigungselementes die Festigkeitsklasse des Funktionsträgers durch die Materialverarbeitung des Funktionselementes, d.h. dessen Schaft- und Kopfteil, bestimmt wird, und nicht durch die Niethülse, zumal das Schaftteil und das Kopfteil des Funktionselementes permanent untereinander verbunden sind. Die Niethülse kann wiederum so ausgelegt werden, daß sie aufgrund der formschlüssigen Verbindung mit dem plattenförmigen Bauteil bzw. mit dem Funktionselement selbst ohne weiteres imstande ist, die der Festigkeitsklasse entsprechenden Axialkräfte zu übertragen, ohne zu versagen.

Wenn das Funktionselement ein Befestigungselement ist, kann dieses entweder als Mutterelement oder als Bolzenelement realisiert werden. Im ersten Fall ist das Funktionselement hohl ausgebildet, wobei das Gewinde als Innengewinde im Kopfteil und/oder Schaftteil realisiert ist. Im Falle eines Bolzenelements wird das Schaftteil mit einem Außengewinde versehen.

Insbesondere für die Anwendung in einem blinden Bohrloch weist die Niethülse einen rohrförmigen, dem Kopfteil zugewandten, verformbaren Bereich und einen ringförmigen, dem Kopfteil abgewandten, zumindest im wesentlichen nicht verformbaren Bereich auf. Wird dagegen der Funktionsträger in ein durchgehendes Bohrloch eingesetzt, besteht die Niethülse vorzugsweise aus einem rohrförmigen, dem Kopfteil zugewandten, verformbaren Bereich und einem ringförmigen, dem Kopfteil abgewandten, verformbaren Bereich.

An dieser Stelle soll auf die US-A-4,212,224 kurz hingewiesen werden. Diese zeigt einen in ein Bauteil, beispielsweise in ein Blechteil oder ein Kunststoffteil einsetzbaren Funktionsträger, bestehend aus einem Funktionselement in Form eines Bolzen mit Schaft- und Kopfteil und aus einer Niethülse. Der Funktionsträger ist aber nicht einseitig in das Bauteil einsetzbar, denn der rohrförmige, verformbare Bereich der Niethülse muß auf der anderen Seite des Bauteils vom Kopfteil des Funktionselementes umgenietet werden wozu das Bauteil von beiden Seiten zugänglich sein muß. Darüberhinaus ist der rohrförmige, verformbare Bereich der Niethülse dem Kopfteil abgewandt und nicht zugewandt. Die Niethülse umfaßt auch einen ringförmigen Bereich der nicht verformbar ist. Dieser ringförmige Bereich ist aber im Gegensatz zu der vorliegenden Lehre nicht dem Kopfteil abgewandt, sondern dem Kopfteil zugewandt angeordnet.

Darüberhinaus wird bei der Verformung der Niethülse gemäß US-PS-4,212,224 die Niethülse nicht durch eine Bewegung des rohrförmigen Bereiches entlang einer Gleitfläche im Übergangsbereich zwischen dem Schaftteil und dem Kopfteil des Funktionselementes radial nach außen verformt. Statt dessen wird durch die Kompression der Niethülse (durch Kraftanbringung von beiden Seiten) der mittlere, dünner ausgebildete Bereich der Niethülse radial nach innen in einer Nut im Schaftteil des Funktionselementes eingepreßt, wobei diese radiale Verformung auch nicht als gleitende Bewegung zu verstehen ist. Die ringförmige Nut begrenzt lediglich das Ausmaß der radial nach innen gerichteten Verformung des Nietteils. Somit unterscheidet sich der Gegenstand der US-A-4,212,224 entscheidend vom Gegenstand des vorliegenden Vorschlages.

Bei dem vorliegenden Vorschlag ist die dem Kopfteil abgewandte Stirnfläche der Niethülse, d.h. des ringförmigen Bereiches, vorzugsweise senkrecht zur Längsachse des Schaftteils angeordnet und bildet somit eine Fläche, an welcher Axialkräfte ausgeübt werden können, um die Niethülse entlang des Schaftteils zu bewegen und die erwünschte radial nach außen gerichtete Verformung der Niethülse an der Hohlkehle zu bewerkstelligen. Die genannte Stirnfläche der Niethülse ist bei einer bevorzugten Ausführungsform als Gleitfläche ausgebildet und kann dann in axialer Richtung mittels eines Teils, das zur Erzeugung der axialen Bewegung der Niethülse gedreht wird, in Richtung auf das Kopfteil des Funktionselementes zu gedrückt werden.

Es könnte beispielsweise ein Mutterelement am mit Außengewinde versehenen Schaftteil des Funktionselementes aufgeschraubt werden und durch die Drehung des Mutterelementes eine entsprechende axiale Kraft auf die Niethülse ausgeübt werden. Um eine Mitdrehung der Niethülse zu verhindern, können in Längsrichtung des Funktionselementes sich erstreckende Nasen oder Nuten im Bereich der Hohlkehle vorgesehen werden.

Es ist aber auch möglich, die Niethülse selbst in dem dem Kopfteil des Funktionselements abgewandten Bereich mit einem Innengewinde zu versehen und die Niethülse selbst dadurch in Richtung des Kopfteils zu bewegen, so daß sie auf einem entsprechenden Außengewinde auf dem Schaftteil des Funktionselements, mindestens im Bereich benachbart zur Hohlkehle, gedreht wird.

In diesem Fall ist die dem Kopfteil abgewandte Stirnfläche der Niethülse zur Aufnahme von die Niethülse drehenden und die Verformung der Niethülse bewerkstelligenden Drehmomenten auszulegen.

Um eine gleichzeitige Drehbewegung des Funktionselements aufgrund von Reibungskräften zu vermeiden, ist der Schaftteil des Funktionselements an dem dem Kopfteil abgewandten Ende vorzugsweise mit einer Einrichtung zur Übertragung von Drehmomenten versehen. Diese Einrichtung kann ein mehrere Seitenflächen oder Längsnuten aufweisender Zapfen sein, kann aber auch die Form einer im freien Ende des Schaftteils ausgebildeten Inbusschraubenaufnahme, beispielsweise in Form eines Innensechskantes, aufweisen.

Bei einer besonders bevorzugten Ausführungsform weist der Schaftteil des Funktionselements zumindest im Bereich unmittelbar vor der Hohlkehle eine Ringnut auf, wobei der ringförmige Bereich der Niethülse in diese Ringnut hinein verformbar ist.

Bei einer weiteren bevorzugten Ausführungsform weist der ringförmige Bereich der Niethülse in radialem Schnitt betrachtet zumindest im wesentlichen die Form eines rechtwinkligen Dreiecks auf, dessen Außenseite schräg zu der dem Kopfteil abgewandten Stirnfläche der Niethülse und zu der dem Schaftteil zugewandten Innenfläche der Niethülse angeordnet ist. Diese Gestaltung ist so getroffen, daß der maximale Durchmesser der Niethülse etwas größer ist als der Durchmesser des Bohrloches des plattenförmigen Bauteils, so daß die Schrägfläche des rechtwinkligen Dreiecks auf die ringförmige Kante des Bohrloches im plattenförmigen Bauteil liegt und bei der Verformung der Niethülse zu einer Verformung der Wandung des Bohrloches führt, so daß sich ein Ringwulst ausbildet, der in eine ringnutförmige Aufnahme der Niethülse zu liegen kommt, die bei der radial nach außen gerichteten Verformung des dem Kopfteil des Funktionselementes zugewandten Bereiches der Niethülse zwischen diesem und der Schrägfläche des ringförmigen Bereiches der Niethülse ausgebildet wird.

Besonders bevorzugte Ausführungsformen des Funktionsträgers ergeben sich aus den weiteren Unteransprüchen.

Wird der Funktionsträger in ein blindes Bohrloch in ein plattenförmiges Bauteil eingesetzt, entsteht erfindungsgemäß ein Zusammenbauteil entsprechend Anspruch 20. Wird ein erfindungsgemäßer Funktionsträger in ein plattenförmiges Bauteil mit einem durchgehenden Bohrloch eingesetzt, entsteht ein erfindungsgemäßes Zusammenbauteil nach Anspruch 21.

Ein erfindungsgemäßes Verfahren zum Einsetzen des erfindungsgemäßen Funktionsträgers in ein plattenförmiges Bauteil zeichnet sich dadurch aus, daß der Kopfteil des Funktionselements durch ein im plattenförmigen Bauteil ausgebildetes Loch hindurch geführt wird oder in eine im plattenförmigen Bauteil ausgebildete Vertiefung hinein gedrückt wird und die Niethülse anschließend in axialer Richtung des Funktionselements auf die Hohlkehle und auf das Kopfteil des Funktionselements zu bewegt wird, wodurch der ringförmige Bereich der Niethülse durch die Hohlkehle radial nach außen umgelenkt wird bis in eine Verankerungsstellung, in der das freie Ende des rohrförmigen Bereiches radial über das Kopfteil des Funktionselements hinausragt.

Ein erfindungsgemäßes Werkzeug zum Einsetzen des erfindungsgemäßen Funktionsträgers zeichnet sich vorzugsweise entsprechend Anspruch 30 aus.

Weitere erfindungsgemäße Ausbildungen des Zusammenbauteils, des Verfahrens und des Werkzeuges ergeben sich aus den weiteren Patentansprüchen sowie aus der nachfolgenden Beschreibung von bevorzugten Ausführungsbeispielen.

Die Erfindung wird nachfolgend näher erläutert anhand von Ausführungsbeispielen unter Bezugnahme auf die Zeichnungen, die zeigen:
- Fig. 1: eine Seitenansicht eines Funktionselements in Form eines Bolzenelementes,
- Fig. 2: einen Längsschnitt durch eine Niethülse,
- Fig. 3: eine Draufsicht auf die Niethülse der Fig. 2 in Pfeilrichtung III gesehen,
- Fig. 4: eine Darstellung entsprechend Fig. 1, jedoch mit der Niethülse auf dem Funktionselement in einer Ausgangsposition angeordnet,
- Fig. 5: eine Draufsicht auf das Bolzenelement der Fig. 1 in Pfeilrichtung V gesehen,
- Fig. 6: das Bolzenelement der Fig. 1, mit der Niethülse im verformten Zustand in der Endposition gezeigt,
- Fig. 7: eine Darstellung entsprechend Fig. 6, jedoch nach der Einsetzung des Bolzenelements mit Niethülse in ein Blindloch eines Bauteils, hier aus Kunststoff bestehend,
- Fig. 8: eine Darstellung der Fig. 7 mit einem Längsquerschnitt durch ein Werkzeug zur Verformung der Niethülse,
- Fig. 9: eine Darstellung entsprechend Fig. 7, jedoch mit einer auf dem Bolzenelement aufgeschraubten Mutter, die zugleich als Werkzeug zur Verformung der Niethülse dienen kann,
- Fig. 10: eine Darstellung entsprechend Fig. 1, jedoch von einer abgewandelten Ausführungsform eines Bolzenelements,
- Fig. 11: eine Stirnansicht des Bolzenelements der Fig. 10 in Pfeilrichtung XI gesehen,
- Fig. 12: eine teilweise geschnittene, perspektivische Darstellung einer anderen Ausführungsform einer erfindungsgemäßen Niethülse,
- Fig. 13: ein Längsschnitt durch die Niethülse der Fig. 12, entsprechend der Schnittebene XIII-XIII,
- Fig. 14: eine Draufsicht auf das Stirnende der Niethülse der Fig. 12 in Pfeilrichtung XIV gesehen,
- Fig. 15: eine Darstellung der Niethülse der Fig. 12 auf dem Bolzenelement der Fig. 10 in Ausgangsposition gezeichnet,
- Fig. 16: die Kombination der Fig. 15 nach der Verformung der Niethülse in deren Endposition,
- Fig. 17: eine Darstellung ähnlich der Fig. 7, jedoch unter Anwendung der Kombination des Funktionselements und der Niethülse der Fig. 15,
- Fig. 18: eine Darstellung ähnlich der Darstellung der Fig. 16, jedoch mit dem Element in ein plattenförmiges Bauteil in Form eines Blechteils eingesetzt,
- Fig. 19: eine schematische Darstellung einer weiteren erfindungsgemäßen Bolzenelement-und-Niethülsen-Kombination, die insbesondere zur Anwendung mit einem Blechteil ausgelegt ist,
- Fig. 20: eine schematische Darstellung der Bolzenelement-und-Niethülsen-Kombination der Fig. 19, um zu zeigen, wie das Einsetzen in ein vorgelochtes Blechteil erfolgt, und
- Fig. 21, 22: Darstellungen ähnlich den Fig. 19 und 20, jedoch unterAnwendung eines Funktionselements in Form einer Mutter.

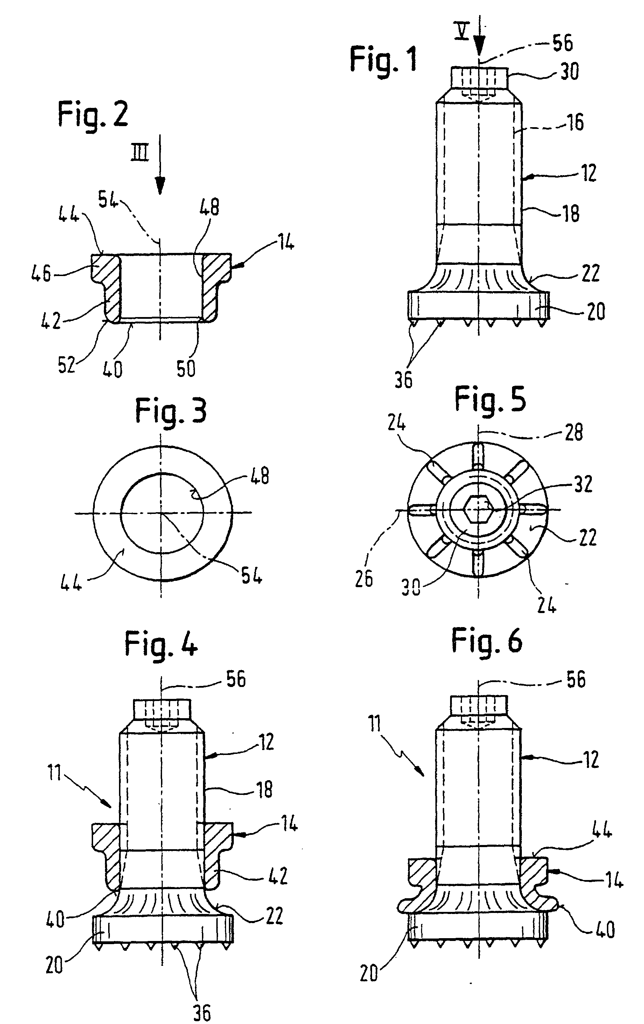

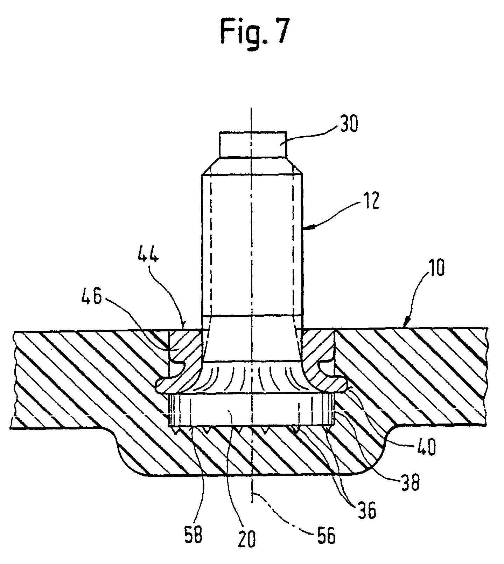

Die Fig. 1-7 befassen sich mit einer ersten erfindungsgemäßen Ausführungsform eines Funktionsträgers 11, der einseitig in ein KunststoffBauteil 10 (Fig. 7) einsetzbar ist, und der aus einem Bolzenelement 12 und einer Niethülse 14 besteht. Das Bolzenelement 12 hat ein mit einem Gewinde 16 versehenen Schaftteil 18 und weist im Übergangsbereich zwischen dem Schaftteil 18 und dem Kopfteil 20 eine eine Gleitfläche zur Verformung der Niethülse bildende Hohlkehle 22 auf. Wie aus Fig. 5 ersichtlich sind in diese Gleitfläche gerundete Nuten 24 eingearbeitet, die jeweils in einer Längsebene des Bolzenelements 12, beispielsweise in der Ebene 26 oder der Querebene 28, angeordnet sind. Diese gerundeten Vertierungen sind nicht zwingend notwendig und könnten weggelassen werden oder durch wulstartige Erhebungen der gleichen Ausrichtung ersetzt werden. Es könnten auch Kombinationen von wulstartigen Erhebungen und nutartigen Vertiefungen zur Anwendung gelangen. Diese nutartigen Vertiefungen bzw. die entsprechenden wulstartigen Erhebungen sorgen dafür, eine relative Verdrehung des Bolzenelementes und der Niethülse zu verhindern, die je nach Auslegung des Elements wünschenswert ist, wie nachfolgend erläutert wird.

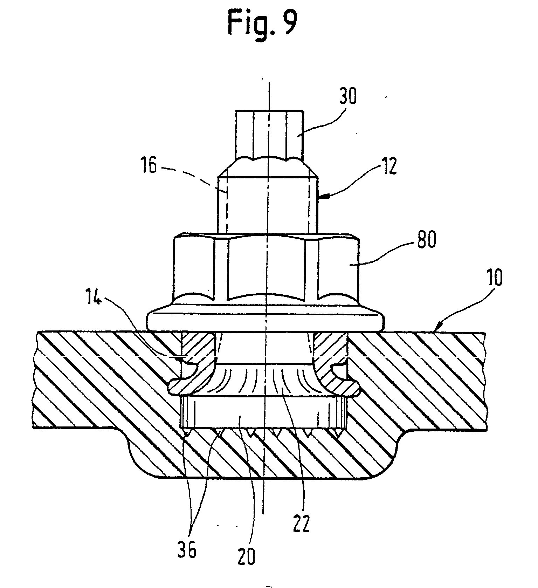

An seinem dem Kopfteil 20 abgewandten Stirnende weist das Bolzenelement 12 einen Zapfen 30 auf, der - wie aus Fig. 5 ersichtlich - hier einen Innensechskant enthält und Querabmessungen aufweist, die kleiner sind als der Kerndurchmesser des Gewindes. Anstelle einen Innensechskant anzuwenden, könnte man auch einen Außensechskant 30 anwenden, was in Fig. 9 angedeutet ist. Auch kann im Prinzip jede bekannte Schlüsselaufnahmeform Anwendung finden, sei es in Form einer Innenaufnahme oder einer Außenaufnahme. Zweck der gewählten Schlüsselaufriahme ist es, das Bolzenelement mit einem geeigneten Werkzeug während dessen Einsetzen verdrehsicher zu halten.

Zum selben Zweck weist das Bolzenelement 12 der Fig. 1 auf der dem Gewinde 16 abgewandten Stirnfläche des Kopfteils 20 mehrere konusspitzenartige oder pyramidenartige Erhebungen 36 auf, die bei Anwendung in einem blinden Loch 38 in einem Bauteil 10 gemäß Fig. 7 in den Boden des blinden Lochs 38 eingreifen und ebenfalls einen Beitrag zur Verdrehsicherheit leisten.

Die Niethülse 14 weist in der Ausführung gemäß den Fig. 2 und 3 an einem Stirnende 40 einen rohrförmigen, verformbaren Bereich 42 und am anderen Stirnende 44 eine im Vergleich zu dem Bereich 42 dickeren, zumindest im wesentlichen nicht verformbaren Bereich 46 auf.

Die Niethülse 14 hat eine zylindrische Passage 48, deren Innendurchmesser geringfügig größer ist als der Außendurchmesser des Gewindes 18, so daß die Niethülse zwar über den Gewindezylinder geführt, jedoch in seiner axialen Bewegung entlang des Gewindezylinders 18 nicht behindert wird.

Das Stirnende 40 geht über eine gerundete Fläche 50 in die zylindrische Passage 48 über. Diese gerundete Fläche 50 unterstützt die Gleitbewegung des verformbaren Abschnittes 42 der Niethülse bei der Verformung an der Gleitfläche 22. Auch der Übergang 52 zwischen dem Stirnende 40 und der Außenseite des verformbaren Abschnittes 42 ist sanft gerundet, um das Eindringen des Stirnendes des Nietabschnittes in ein Bauteil zu erleichtern.

Die Stirnfläche 44 der Niethülse steht senkrecht zur Längsachse 54 der Niethülse und ist als Gleitfläche ausgebildet.

Wie aus Fig. 4 leicht ersichtlich ist, wird die Niethülse 14 über das Schaftteil 16 des Bolzenelementes 12 gesetzt, mit ihrer Achse 54 koaxial zur Längsachse 46 des Bolzenelements und so weit nach unten gedrückt, bis das Stirnende 40 am Anfang des sanft gerundeten Übergangs 22 zum Kopfteil gelangt. Dies stellt die Ausgangsstellung des erfindungsgemäßen Funktionsträgers dar.

Wird die Niethülse 14 weiter nach unten gedrückt, gleitet der zylindrische Nietabschnitt 42 entlang der durch den Übergang 22 gebildeten Gleitfläche, d.h. entlang der Hohlkehle. Das Stirnende 40 des Nietabschnitts wird zunehmend in radialer Richtung nach außen gedrückt, bis die Endstellung gemäß Fig. 6 erreicht wird, wo das verformte Stirnende 40 der Niethülse 14 nunmehr senkrecht zur Längsachse 56 des Funktionselements 12 und radial über den maximalen Durchmesser des Kopfteils 20 des Bolzenelements steht bzw. hinaussteht.

Während der entsprechenden Verformung des zylindrischen Nietabschnitts wirkt sich der auf die Stirnfläche 44 ausgeübte Druck auch so aus, daß der zylindrische Nietabschnitt 42 zum Teil in die Nuten 24 hineingedrückt wird. Diese Nuten 24 sorgen dann dafür, daß die Niethülse nur in axialer Richtung verschoben wird, jedoch gegenüber dem Bolzenelement 12 nicht gedreht wird.

Fig. 6 dient nur zur Erläuterung der Verformung der Niethülse 14.

Fig. 7 zeigt eine erste praktische Realisierung des Einbaus des Funktionsträgers gemäß Fig. 4 in ein Bauteil 10.

Wie aus Fig. 7 ohne weiteres ersichtlich, weist das Blindloch 38 des plattenförmigen Bauteils 10 einen Innendurchmesser auf, der dem Außendurchmesser des Kopfteils 20 des Bolzenelements 12 entspricht. Das Blindloch 38 wird vor der Einführung des Bolzenelements 12 angefertigt und weist eine zur Längsachse 56 des Bolzenelements (zugleich die Längsachse des Blindlochs) senkrechte Bodenfläche 58 auf. Die Kombination des Bolzenelements 12 mit der Niethülse 14 in der Ausgangsstellung gemäß Fig. 4 wird in das Blindloch in axialer Richtung eingeführt und leicht angedrückt, so daß die konusförmigen Spitzen 36 sich in das Material des plattenförmigen Bauteils, d.h. in die Bodenfläche 58 des Blindlochs eingedrückt werden, wodurch eine Verdrehsicherung des Bolzenelements 12 im plattenförmigen Bauteil 10 erreicht wird. Während der Verformung der Niethülse drückt sich das in radialer Richtung umgelenkte, ehemalige Stirnende 40 des ringförmigen Nietabschnitts 42 in die Wandung des Blindlochs 38 hinein und verhindert im eingebauten Zustand, so wie in Fig. 7 gezeigt, daß das Bolzenelement 12 in axialer Richtung 56 aus dem plattenförmigen Bauteil 10 herausgezogen werden kann.

Man merkt, daß in diesem Beispiel die Stirnfläche 44 der Niethülse bündig mit der Oberfläche des plattenförmigen Bauteils 10 liegt. Man merkt auch, daß der Außendurchmesser des nicht verformbaren Bereiches 46 der Niethülse dem Innendurchmesser des Blindloches 38 entspricht.

Zur Durchführung der Verformung der Niethülse bieten sich verschiedene Möglichkeiten an.

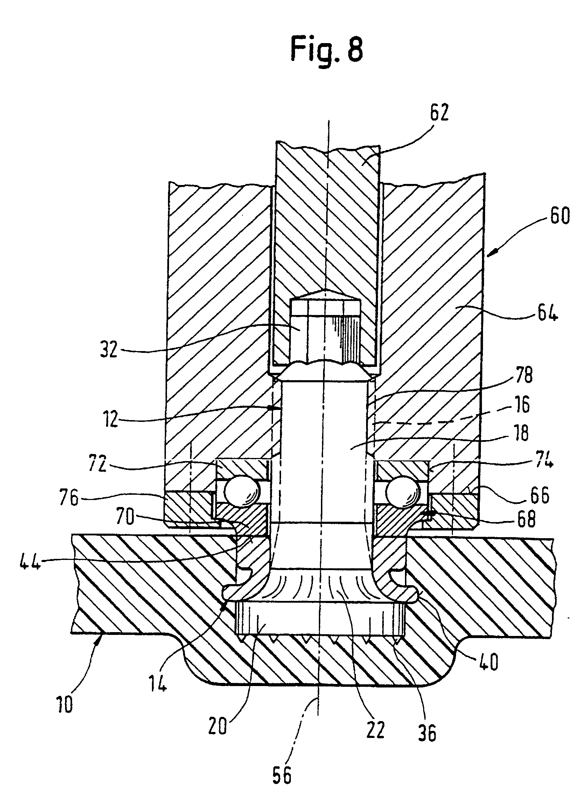

Wenn es möglich wäre, das plattenförmige Bauteil 10 von unten abzustützen, würde es genügen, eine in Richtung der Längsachse 56 des Bolzenelements gerichtete Kraft in einer Presse oder dergleichen auf die Stirnfläche 44 auszuüben. In vielen Fällen ist eine derartige Abstützung des plattenförmigen Bauteils 10 jedoch nicht möglich. Es könnte dann ein Werkzeug gemäß Fig. 8 zur Anwendung gelangen.

In diesem und in allen nachfolgenden Beispielen werden die gleichen Bezugszahlen verwendet wie im Zusammenhang mit der Ausführung gemäß den Fig. 1-7. Es ist anzunehmen, daß die bisherige Beschreibung im Zusammenhang mit den Fig. 1-7 für die späteren Ausführungsbeispiele gilt, es sei denn, etwas Gegenteiliges wird zum Ausdruck gebracht.

Das Werkzeug 60 der Fig. 8, das zum Einsetzen des Funktionsträgers verwendet wird, besteht aus zwei koaxial zueinander angeordneten Teilen, nämlich einerseits in der Mitte ein nicht drehbarer oder festhaltbarer Schlüssel 62, der an seinem, dem Bolzenelement 12 zugewandten Stirnende eine Innensechskantaufnahme aufweist, die den aus als Außensechskant 32 realisierten Zapfen 30 des Bolzenelements 12 passend aufnimmt und eine Drehung des Bolzenelements während dessen Einsetzen verhindert. Koaxial zum Schlüssel 62 angeordnet weist das Werkzeug 60 auch eine zylindrische Hülse 64 auf, die an ihrem, dem Bauteil 10 zugewandten Stirnende 66 ein Drucklager 68 trägt, hier in Form eines axialen Rillenkugellagers, dessen unterer Laufring 70 auf die Stirnfläche 44 der Niethülse drückt und dessen oberer Laufring 72 in einer passenden Aufnahme 74 in dem Stirnende 66 der drehbaren Hülse 64 angeordnet ist. Gehalten wird das Drucklager 68 von einem an der Stirnfläche 66 der Hülse 64 mittels Schrauben (nicht gezeigt) angeschraubten Haltering 76, der einerseits verhindert, daß die zwei Laufringe 70 und 72 auseinanderfallen, andererseits aber eine relative Verdrehung zwischen dem Laufring 70 und der Hülse 64 zuläßt.

Unmittelbar oberhalb der Aufnahme 74 für das Drucklager 68 weist die Hülse 64 ein Innengewinde 78 auf, das komplementär zum Gewindezylinder 18 des Bolzenelements 12 ausgelegt ist. Auf diese Weise führt eine Drehung der Hülse 64 um die Längsachse 56 des Bolzenelements herum zu einer axialen Bewegung der Hülse mit Drucklager 68 in Richtung der Längsachse 56 auf das Kopfteil des Bolzenelements zu. Während dieser Bewegung verhindert das Drucklager 68, daß Drehmomente auf die Niethülse 14 ausgeübt werden, so daß die Gefahr einer Verdrehung zwischen der Niethülse 14 und dem Bolzenelement 12 hier nicht gegeben ist. Es ist somit bei dieser Ausführungsform durchaus möglich, auf Nuten oder Wülste 64 zu verzichten.

Während der Drehbewegung der Hülse 64 beim Einsetzen des Funktionsträgers ermöglicht der Schlüssel 62, der in axialer Richtung 56 des Werkzeugs 60 auf das Bolzenelement 12 gedrückt wird, daß das von der Hülse 64 über die miteinander kämmenden Gewinde 78 und 18 auf das Bolzenelement 12 ausgeübte Drehmoment nicht zu einer tatsächlichen Drehung des Bolzenelements 12 gegenüber dem plattenförmigen Bauteil führt.

Sobald der Endzustand gemäß Fig. 8 erreicht ist, wird die Hülse 64 in der entgegengesetzten Richtung gedreht, um das Werkzeug 60 vom Bolzenelement zu lösen, wodurch der Endzustand entsprechend Fig. 7 erreicht wird.

Wie in Fig. 9 dargestellt, kann dann eine Mutter 80 auf das Bolzenelement 12 aufgeschraubt werden und kann zur Befestigung eines anderen Bauteils auf dem Bauteil 10 benutzt werden. Fig. 9 zeigt, daß die gleiche Mutter 80 oder eventuell eine gesonderte Mutter 80 mit längerem Gewindezylinder auch zum Einsetzen des Funktionsträgers herangezogen werden kann. Zu diesem Zweck wird die Mutter 80 auf den Gewindezylinder 18 des Bolzenelements 12 im Zustand gemäß Fig. 4 aufgeschraubt. Danach wird der Funktionsträger in das Blindloch hineingesetzt. Man kann dann mittels geeigneter Schlüssel das Bolzenelement 12 über den Zapfen 30 am vorhandenen Außensechskant festhalten und die Mutter 80 weiter hinunterschrauben, um die Verformung der Niethülse zu bewirken.

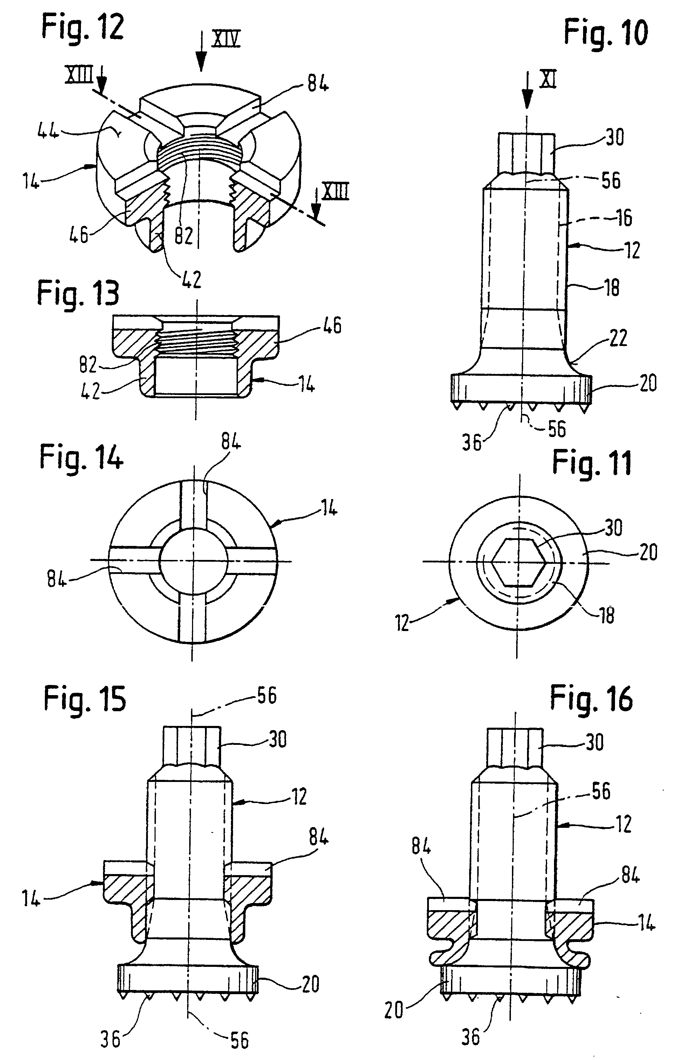

Fig. 10 zeigt im Prinzip das gleiche Bolzenelement 12 wie Fig. 1, nur mit einem etwas längeren Zapfen 30, der besser imstande ist, eine Drehung des Bolzenelements bei dessen Einsetzen zu verhindern. Bei diesem Ausführungsbeispiel kommt eine abgewandelte Niethülse 14 zur Anwendung. Die Niethülse 14 dieses Ausführungsbeispiels weist wie bisher einen rohrförmigen, zylindrischen, verformbaren Abschnitt 42 und einen ringförmigen, nicht verformbaren Abschnitt 46 auf. Der ringförmige, nicht verformbare Abschnitt 46 weist ein Innengewinde 82 auf, das zum Gewindezylinder 18 des Bolzenelements 12 komplementär ausgebildet ist, so daß die Niethülse selbst auf das Bolzenelement 12 aufgeschraubt werden kann. Um diese Aufschraubbewegung durchzuführen, weist der ringförmige Bereich 46 der Niethülse 14 vier rechtwinklig zueinander angeordnete Antriebsnuten 84 im Stirnende 44 auf. Auch andere formschlüssige Werkzeugangriffselemente können am nicht verformbaren Abschnitt 42 vorgesehen werden.

Die Niethülse wird zunächst auf den Gewindezylinder 18 des Bolzenelements aufgeschraubt, bis die Ausgangsposition gemäß Fig. 15 erreicht ist.

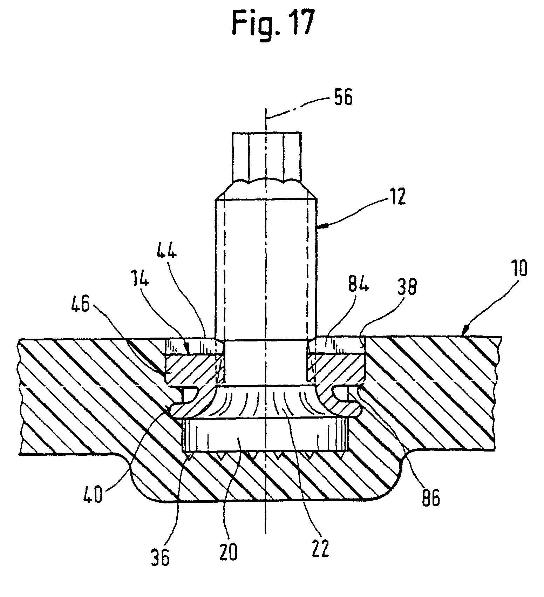

In diesem Zustand wird das Kopfteil des Bolzenelements 12, das auch hier mit konusförmigen Spitzen 136 versehen ist, in das Blindloch eines Bauteils eingesetzt, wie beispielsweise in Fig. 17 gezeigt.

Die Niethülse 14 kann nun weiter nach unten geschraubt werden mittels eines Werkzeuges, das in die Antriebsnuten 84 im Stirnende 144 der Niethülse eingreift, so daß die Niethülse 14 gleichzeitig um die Längsachse 56 des Bolzenelements gedreht wird und sich in axialer Richtung auf das Kopfteil 20 des Bolzenelements 12 zubewegt. Diese axiale Bewegung führt auch zu der Verformung des zylindrischen Nietabschnitts 42. bis der Endzustand gemäß Fig. 16 erreicht ist. Man sieht, daß in diesem Beispiel die Niethülse relativ zum Bolzenelement gedreht wird. Um eine gleichzeitige Drehung des Bolzenelements zu verhindern, kann wie bisher ein Werkzeug auf den Zapfen 30 aufgesetzt werden. Da bei diesem Beispiel eine relative Verdrehung zwischen der Niethülse und dem Bolzenelement stattfinden soll, fehlen, wie in Fig. 11 gezeigt, die ringförmigen Nuten oder Wülste 24 gemäß Fig. 5.

Fig. 17 zeigt nun den Funktionsträger im eingebauten Zustand in einem Bauteil. Unterschiedlich zu der bisherigen Ausführungsform gemäß Fig. 7 ist hier zunächst, daß das Blindloch 38 im oberen Bereich einen vergrößerten Durchmesser aufweist, wobei dieser Bereich zur Aufnahme des ebenfalls im Durchmesser vergrößerten, nicht verformbaren Bereich 46 der Niethülse 14 dient. Die Tiefe dieses Bereiches ist so gewählt, daß die Stirnfläche 44 der Niethülse 14 im eingebauten Zustand bündig mit der Oberfläche des Bauteils 10 liegt. Die zwischen den.zwei Zylinderbereichen des Blindloches 38 gebildete Ringschulter 86 sorgt für eine bessere Abstützung des Bolzenelements 12 gegenüber dem Bauteil und bietet einen zusätzlichen Schutz gegen Verkanten des Bolzenelements. Der etwas größere Durchmesser des nicht verformbaren Bereichs 46 der Niethülse bietet auch mehr Sicherheit, daß dieser Bereich der Niethülse beim Aufbringen der erforderlichen Drehmomente nicht verformt wird. Der nicht verformbare Abschnitt 46 der Niethülse kann auch als Flansch ausgebildet werden, der auf der freiliegenden Oberfläche des Bauteils um das Bohrloch herum zu liegen kommt, d.h. hier eine entsprechende Auflagefläche aufweisen.

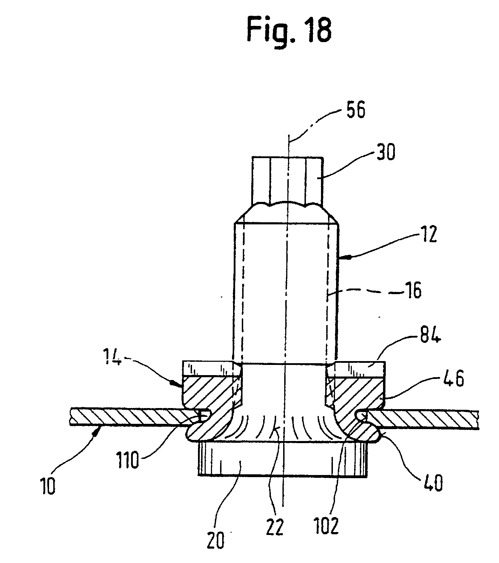

Fig. 18 zeigt, daß der Funktionsträger 11 der Fig. 15 auch mit einem ein durchgehendes Loch 102 aufweisendes Blech- oder Bauteil 10 verwendet werden kann. Hier kommt der Randbereich des gelochten Blechteils bzw. des hier plattenförmigen Bauteils in die zwischen dem radial nach außen verformten Ende 40 der Niethülse und dem ringförmigen Bereich 46 der Niethülse gebildete Nut 110 zu liegen. Die Verdrehsicherung der Verbindung ist hier hauptsächlich durch die erreichte Klemmung sichergestellt, kann aber durch formgebende Merkmale unterstützt werden, beispielsweise durch Ausbuchtungen in der Wand des Loches 102. Bei dieser Ausführungsform können die Spitzen 36 gemäß Fig. 15 entfallen.

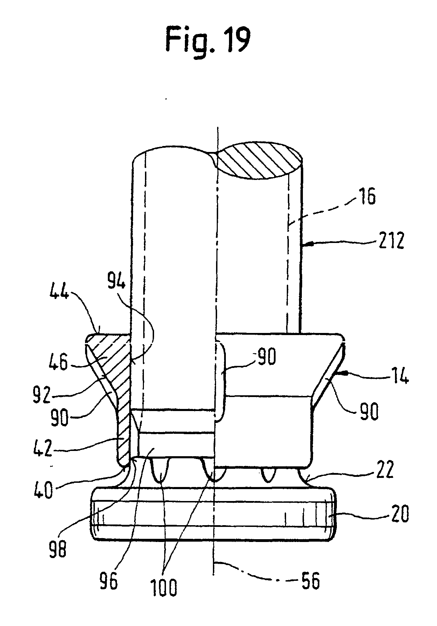

Bei der Ausführung gemäß Fig. 19 ist sowohl die Niethülse 14 als auch das Funktionselement 12 etwas anders gestaltet als bisher. Die Niethülse 14 ist auf der linken Seite der Längsachse des Funktionselements 12 im Querschnitt dargestellt und auf der rechten Seite der Längsachse 15 in Seitenansicht ersichtlich. Die Niethülse 14 besteht auch hier aus einem zylindrischen, verformbaren Bereich 42 und aus einem zweiten, ringförmigen Bereich 46, der hier einen zumindest im wesentlichen dreieckigen Querschnitt aufweist und darüber hinaus verformbar ist.

Auf der Außenseite des oberen, ringförmigen Abschnitts 46 der Niethülse 14 gemäß Fig. 19 befinden sich auf der schrägen Außenfläche längliche Nasen 90, die bezogen auf die Längsachse 56 des Bolzenelements 12 bzw. der Niethülse 14 jeweils in radialen Ebenen angeordnet sind. Man sieht hier, daß der ringförmige Bereich 46 der Niethülse 14 in radialem Schnitt betrachtet zumindest im wesentlichen die Form eines rechtwinkligen Dreiecks aufweist, dessen Außenseite 92 schräg zu der dem Kopfteil 20 abgewandten Stirnfläche 44 der Niethülse 14 und zu der dem Schaftteil zugewandten Innenfläche 94 der Niethülse angeordnet ist. Diese Innenfläche 94 der Niethülse bildet in axialer Fortsetzung die Innenwand des rohrförmigen Bereiches der Niethülse. Das Stirnende 40 der Niethülse 14 ist entsprechend dem Stirnende 40 der Niethülse der bisherigen Ausführungsbeispiele ausgebildet.

Bei dieser Ausführungsform ist das Funktionselement 12, wie bei den anderen Ausführungsbeispielen, als Bolzenelement ausgebildet und weist demnach einen Gewindezylinder 16 auf.

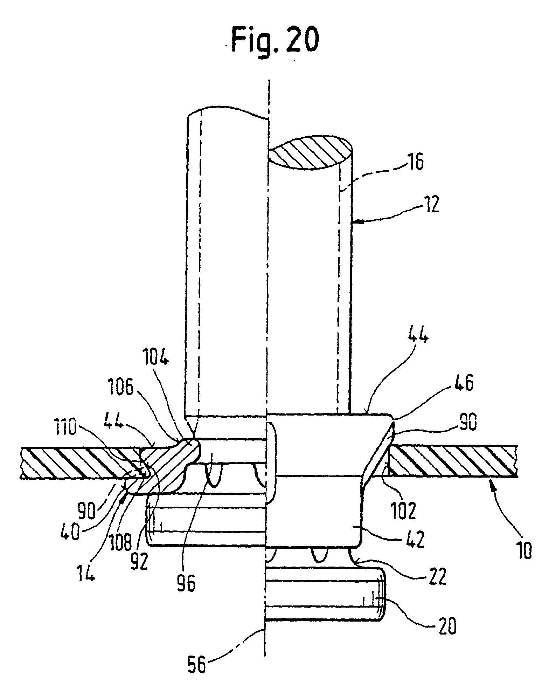

Zwischen dem dem Kopfteil 20 zugewandten Auslaufende des Gewindezylinders 16 und der Gleitfläche 22 befindet sich in diesem Ausführungsbeispiel eine Ringnut 96, deren Funktion später anhand von Fig. 20 beschrieben wird.

Diese Ringnut 96 geht über eine gerundete Ringschulter 98 in die Gleitfläche 22 über. Es sind außerdem in der Gleitfläche 22 einige gerundete Vertiefungen 100 vorhanden, von denen in diesem Beispiel acht Stück in gleichmäßigem Winkelabstand um die Längsachse 56 angeordnet sind.

Der Einbau dieses Funktionsträgers wird nunmehr anhand von Fig. 20 erläutert. Diese Figur zeigt auf der rechten Seite der mittleren Längsachse 56 die Ausgangssituation beim Einbau des Funktionsträgers in ein plattenförmiges Bauteil 10 und auf der linken Seite den fertigen, eingebauten Zustand.

Man merkt mit Bezugnahme auf die rechte Seite der Darstellung in Fig. 20, daß ein zylindrisches Loch 102 in dem plattenförmigen Bauteil 10 vorgesehen ist. Der Innendurchmesser dieses Loches 102 entspricht dem Außendurchmesser des Kopfes 20 des Funktionselements 12. Man merkt auch, daß der maximale Durchmesser des ringförmigen Bereiches 46 der Niethülse etwas größer bemessen ist als das Loch 20, so daß die Niethülse nicht durch das Blechteil hindurchgehen kann. Konkret sitzt die Niethülse 14 mit den Längsnasen 90 auf der oberen Kante des zylinderförmigen Loches 102 auf.

Ausgehend von diesem Zustand wird nunmehr mittels eines Werkzeuges entsprechend der Fig. 8 oder der Fig. 9 eine nach unten gerichtete Kraft auf die Fläche 44 der Niethülse ausgeübt. Es wird gleichzeitig eine nach oben gerichtete Kraft auf den Schaftteil 18 des Bolzenelements 12 ausgeübt. Diese beiden Kräfte führen zu einer Verformung der Niethülse 14, so daß diese die Endform mit einem Querschnitt erreicht, wie auf der linken Seite der Fig. 20 gezeigt ist. Das heißt, daß der rohrförmige, zylindrische Abschnitt 42 der Niethülse wie bisher über die Gleitfläche 22 gleitet und radial nach außen verformt wird, so daß das ehemalige Stirnende 40 der Niethülse radial über das Kopfteil 20 des Bolzenelements 12 hinaussteht und auf der Unterseite des plattenförmigen Bauteils 10 zu liegen kommt. Der ringförmige Abschnitt 46 der Niethülse wird ebenfalls verformt auf eine Weise, daß ein Teil zu einem ringförmig nach innen gerichteten Vorsprung 104 verformt wird, der zumindest im wesentlichen die Ringnut 96 des Bolzenelements 12 ausfüllt. Dieser ringförmige Vorsprung 104 geht über eine in etwa konusförmige Ringschulter 106 in die restliche Stirnfläche 44 der Niethülse über, die zumindest im wesentlichen bündig mit der dem Kopfteil abgewandten Oberfläche des plattenförmigen Bauteils 10 liegt.

Bei der Verformung der Niethülse 14 führt die schräge Fläche 92 des ringförmigen Teils 46 zu einer Verformung der Wandung des Loches 102, so daß diese einen nach innen gerichteten Ringvorsprung 108 bildet, der in einer zwischen dem Rest der Schrägfläche 92 und der ehemaligen Außenseite des ringförmigen Abschnittes 42, die nunmehr in Fig. 20 waagerecht ausgerichtet ist, gebildeten Nut 110 zu liegen kommt. Die Längsnasen 90 des ringförmigen Bereiches 46 der Niethülse 14 bilden entsprechende Eindellungen im ringförmigen Vorsprung 108. Hiermit sorgen sie dafür, daß die verformte Niethülse verdrehsicher gegenüber dem plattenförmigen Bauteil 10 liegt.

Die ringförmige Niethülse 14 würde aber auch so verformt, daß Bereiche davon in die Vertiefungen 100 zu liegen kommen, wodurch eine Verdrehsicherung des Funktionselements 12 bezüglich der Niethülse erreicht wird. Da das Bolzenelement 12 gegenüber der Niethülse 14 verdrehsicher ist, und die Niethülse 14 gegenüber dem plattenförmigen Bauteil 10 verdrehsicher gehalten ist, ist das Bolzenelement 12 auch verdrehsicher gegenüber dem plattenförmigen Bauteil gehalten.

Dadurch, daß der Ringvorsprung 104 die Ringnut 96 zumindest im wesentlichen ausfüllt und das plattenförmigen Bauteil in der durch die Schrägfläche 92 und den verformten, ringförmigen Bereich 42 der Niethülse gebildeten Nut 110 liegt, ist das Funktionselement 12 auch in axialer Richtung gegenüber dem plattenförmigen Bauteil 10 fixiert.

Nach dem Einbau des Bolzenelements 12 gemäß Fig. 20 kann nun mittels einer auf dem Gewindezylinder 16 aufgeschraubten Mutter ein weiteres plattenförmigen Bauteil auf dem plattenförmigen Bauteil 10 befestigt werden. Dieses weitere plattenförmigen Bauteil weist vorzugsweise eine solche Lochung auf, daß sie von der schrägen Ringschulter 106 zentriert wird. Das weitere plattenförmige Bauteil soll außerdem eine solche Flächenausdehnung haben, daß es sowohl die Stirnfläche 44 der verformten Niethülse 14 als auch einen Teil des die Lochung 102 umfassenden Randes des plattenförmigen Bauteils 10 übergreift.

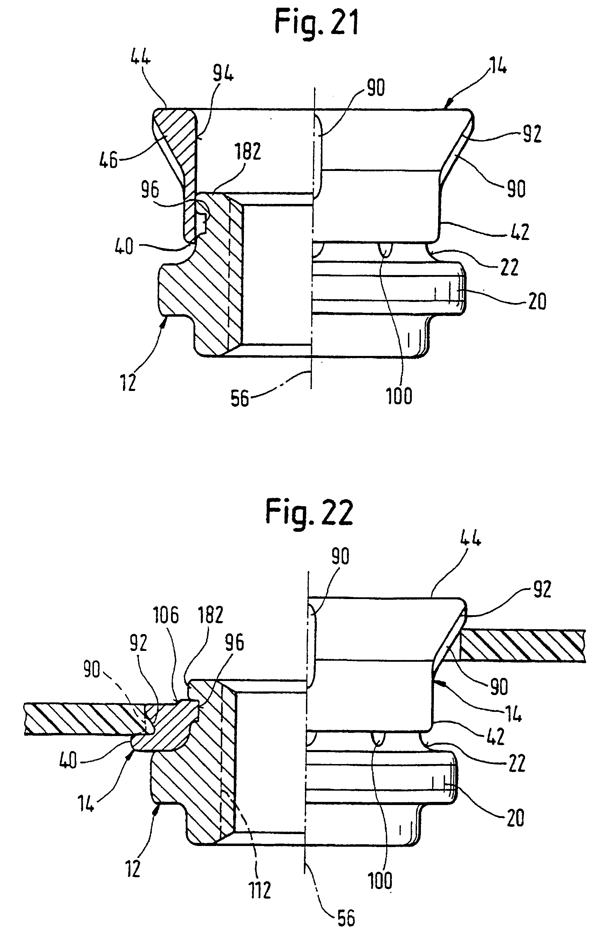

Die Fig. 21 und 22 zeigen eine Darstellung ähnlich der Fig. 19 und 20, bei der jedoch das Funktionselement 12 bzw. das Mutterelement mit einem Innengewinde 112 ausgestattet ist. Zum Einsetzen des Elements wird ein Bolzenteil in das Innengewinde 112 hineingeschraubt und ermöglicht es dem Kopfteil 20 nach oben zu ziehen während die Niethülse nach unten gedrückt wird. Die konusförmige Fläche 106 dient als Zentrierhilfe für das anzuschraubende weitere Bauteil. Die Bauhöhe des Elements wird minimiert, d.h. das Schaftteil 182 wird beschränkt zumindest im wesentlichen auf den Übergangsbereich 22 zum Kopfteil 20. Die Möglichkeit der Realisierung des Funktionselements als Mutterelement besteht im Prinzip bei allen bisherigen Ausführungsformen. Auch besteht die Möglichkeit, andere Funktionen als Schraubfunktionen zu realisieren. Beispielsweise kann das entsprechende Funktionselement als zylindrischer Führungszapfen oder als Schnappbefestigungselement für beispielsweise Teppiche oder dergleichen verwendet werden.

Obwohl das Gewinde 16 des Bolzenelements in den obigen Ausführungsformen für die Erzeugung der axialen Kraft auf der Niethülse 14 ausgenutzt wird, kann gegebenenfalls eine vorzugsweise gehärtete Buchse mit Feingewinde über das Gewinde 16 des Bolzenelements 12 gebracht werden und das Feingewinde für die Erzeugung der axialen Kraft auf der Niethülse benutzt werden.

Durch die kleinere Steigung kann der mechanische Vorteil erhöht werden, d.h. größere Verformungskräfte aufgebracht werden. Auch wäre eine Ausführung ähnlich einem hydraulischen Schraubstock denkbar, wodurch noch größere Verformungskräfte erzeugt werden könnten.

Es soll schließlich darauf hingewiesen werden, daß die Verformung der Niethülse auch mit einem Werkzeug durchführbar ist, das ausgelegt ist, eine ziehende Kraft auf das Schaftteil 18 des Funktionselements vom Kopfteil 20 weg und gleichzeitig eine drückende Kraft auf die Stirnfläche 44 der Niethülse in Richtung auf das Kopfteil 20 auszuüben, ähnlich wie bei einer herkömmlichen Nietzange. Diese Möglichkeit besteht bei allen Ausführungsformen des erfindungsgemäßen Funktionsträgers.

## Patentansprüche

1. Einseitig in ein Bauteil, beispielsweise in ein Blechteil oder ein Kunststoffteil einsetzbarer Funktionsträger (11) bestehend aus einem Funktionselement (12) mit Schaft- und Kopfteil (18, 20) und einer Nietbülse (14),
**dadurch gekennzeichnet,**
**daß** die Niethülse (14) einen rohrförmigen, dem Kopfteil (20) zugewandten verformbaren Bereich (42) aufweist und in axialer Richtung des Schaftteils (18) an diesem entlang bewegbar ist und daß das Funktionselement im Übergangsbereich zwischen dem Schaftteil (18) und dem Kopfteil (20) eine eine Gleitfläche zur Verformung der Niethülse (14) bildende Hohlkehle (22) aufweist, die den rohrförmigen verformbaren Bereich (42) der Niethülse radial nach außen verformt.

2. Funktionsträger nach Anspruch 1,
**dadurch gekennzeichnet,**
**daß** die Niethülse (14) einen ringförmigen, dem Kopfteil (22) abgewandten, zumindest im wesentlichen-nicht verformbaren Bereich (46) aufweist.

3. Funktionsträger nach Anspruch 1,
**dadurch gekennzeichnet,**
**daß** die Niethülse (14) einen ringförmigen, dem Kopfteil (20) abgewandten verformbaren Bereich (46) aufweist.

4. Funktionsträger nach einem der vorhergehenden Ansprüche,
**dadurch gekennzeichnet**
**daß** die dem Kopfteil (20) abgewandte Stirnfläche (44) der Niethülse (14), senkrecht zur Längsachse (56) des Schaftteils (18) angeordnet ist.

5. Funktionsträger nach Anspruch 4,
**dadurch gekennzeichnet,**
**daß** die genannte Stirnfläche (44) der Niethülse (14) als Gleitfläche ausgebildet ist.

6. Funktionsträger nach Anspruch 4,
**dadurch gekennzeichnet,**
**daß** die genannte Stirnfläche (44) der Niethülse (14) zur Übertragung von in axialer Richtung wirkenden Nietkräften ausgebildet ist, jedoch selbst nicht oder zumindest im wesentlichen nicht unter den Nietkräften verformbar ist.

7. Funktionsträger nach Anspruch 4,
**dadurch gekennzeichnet,**
**daß** die genannte Stirnfläche (44) zur Aufnahme von die Niethülse (14) drehenden und die Verformung der Niethülse (14) bewerkstelligenden Drehmomenten ausgelegt ist.

8. Funktionsträger nach Anspruch 7,
**dadurch gekennzeichnet,**
**daß** das Schaftteil (18) des Funktionselements (12) mindestens im Bereich benachbart zur Hohlkehle (22) ein Außengewinde (16) aufweist und daß die Niethülse (14) ein diesem entsprechendes Innengewinde (82) aufweist.

9. Funktionsträger nach einem der vorhergehenden Ansprüche,
**dadurch gekennzeichnet,**
**daß** das Schaftteil (18) des Funktionselements (12) an dem dem Kopfteil (20) abgewandten Ende eine Einrichtung (30) zur Übertragung von Drehmomenten aufweist.

10. Funktionsträger nach Anspruch 9,
**dadurch gekennzeichnet,**
**daß** die Einrichtung ein mehrere Seitenflächen oder Längsnuten aufweisender Zapfen (30) ist.

11. Funktionsträger nach Anspruch 9,
**dadurch gekennzeichnet,**
**daß** die Einrichtung die Form einer im freien Ende des Schaftteils (18) ausgebildeten Werkzeug- bzw.- Schlüsselaufnahme (34) aufweist, beispielsweise in Form eines Innensechskants.

12. Funktionsträger nach einem der vorhergehenden Ansprüche,
**dadurch gekennzeichnet,**
**daß** der Schaftteil (18) des Funktionselementes (12) zumindest im Bereich unmittelbar vor der Hohlkehle (22) eine Ringnut (96) aufweist und daß der ringförmige Bereich (46) der Niethülse in diese Ringnut (96) hinein verformbar ist.

13. Funktionsträger nach einem der vorhergehenden Ansprüche 1 bis 6 oder 9 bis 12,
**dadurch gekennzeichnet,**
**daß** die Hohlkehle mit Verdrehsicherungsmerkmalen (24:100), beispielsweise mehreren in Umfangsrichtung verteilten Vertiefungen und/oder Nasen, versehen ist und die Niethülse (14) durch die Verformung in eine formschlüssige Verbindung mit diesen Verdrehsicherungsmerkmalen (24:100) bringbar ist.

14. Funktionsträger nach einem der vorhergehenden Ansprüche,
**dadurch gekennzeichnet,**
**daß** die dem Schaftteil (18) abgewandte Stirnfläche (44) des Kopfteils (20) mit Verdrehsicherungsmerkmalen, z.B. Verdrehsicherungsnasen und/oder Vertiefungen ausgestattet ist.

15. Funktionsträger nach einem der vorhergehenden Ansprüche 3 bis 16 oder 9 bis 14,
**dadurch gekennzeichnet,**
**daß** der ringförmige Bereich (46) der Niethülse (14) in radialem Schnitt betrachtet zumindest im wesentlichen die Form eines rechtwinkligen Dreiecks aufweist, dessen Außenseite (92) schräg zur dem Kopfteil (20) abgewandten Stirnfläche (44) der Niethülse (14) und zur dem Schaftteil (18) zugewandten Innenfläche der Niethülse (14) angeordnet ist.

16. Funktionsträger nach einem der vorhergehenden Ansprüche,
**dadurch gekennzeichnet,**
**daß** der rohrförmige Bereich (42) der Niethülse (14) eine Innenwand (94) hat, die sich als axiale Fortsetzung der Innenfläche des ringförmigen Bereiches (46) der Niethülse (14) darstellt.

17. Funktionsträger nach einem der vorhergehenden Ansprüche 1 bis 14,
**dadurch gekennzeichnet,**
**daß** der rohrförmige Bereich (42) der Niethülse (14) in radialem Schnitt betrachtet zumindest in etwa rechteckig ist, wobei der rohrförmige Bereich der Niethülse (14) eine Innenwand hat, die sich als axiale Fortsetzung der Innenfläche des ringförmigen Bereichs (46) der Niethülse darstellt und daß der ringförmige Bereich (46) der Niethülse (14) an seiner Außenseite mit der angrenzenden Seite des ringförmigen Bereiches (42) eine Ringschulter bildet.

18. Funktionsträger nach einem der vorhergehenden Ansprüche,
**dadurch gekennzeichnet,**
**daß** das Funktionselement (12) als Bolzenelement ausgebildet ist.

19. Funktionsträger nach einem der vorhergehenden Ansprüche 1 bis 17,
**dadurch gekennzeichnet,**
**daß** das Funktionselement (12) als Mutterelement ausgebildet ist, d.h. zumindest das Schaftteil (18) hohl ausgebildet ist und dieses und/oder das Kopfteil mit einem Innengewinde (112) versehen bzw. versehbar ist.

20. Zusammenbauteil bestehend aus einem Bauteil (10), z.B. Blechteil oder Kunststoffteil, und einem Funktionsträger (11) nach einem oder mehreren der vorhergehenden Ansprüche,
**dadurch gekennzeichnet,**
**daß** das plattenförmige Bauteil (10) ein Loch (102) aufweist, dessen Durchmesser zumindest im wesentlichen dem des Kopfteils (20) entspricht und daß der verformte, rohrförmige Bereich (42) der Niethülse (14) auf der Innenseite zumindest im wesentlichen satt an der Hohlkehle (22) anliegt, radial nach außen über den Rand des Kopfteils (20) des Funktionselements (12) hinaussteht und mit dem ringförmigen Bereich (46) eine den Lochrandbereich des Bauteils aufnehmende Ringnut bildet.

21. Zusammenbauteil bestehend aus einem Bauteil (10), z.B. Blechteil oder Kunststoffteil, und einen Funktionsträger nach einem oder mehreren der vorhergehenden Ansprüche,
**dadurch gekennzeichnet,**
**daß** das Bauteil eine topfartige Vertiefung (38) aufweist, dessen Durchmesser zumindest im wesentlichen dem des Kopfteils (20) entspricht und an deren Boden (58) die dem Schaftteil (18) abgewandte Stirnfläche (44) des Kopfteils (20) verdrehsicher (36) anliegt und daß der verformte, rohrförmige Bereich (42) der Niethülse (14) auf der Innenseite zumindest im wesentlichen satt an der Hohlkehle (22) anliegt, radial nach außen über den Rand des Kopfteils des Funktionselements (12) hinaussteht und in die Seitenwand der topfartigen Vertiefung (38) des Bauteils (10) hineinragt und dort formschlüssig aufgenommen ist.

22. Zusammenbauteil nach Anspruch 20 oder 21,
**dadurch gekennzeichnet,**
**daß** die dem Kopfteil (20) abgewandte Stirnfläche der Niethülse (14) entweder bündig mit der dem Kopfteil (20) abgewandten Oberfläche des Bauteils (10) oder versenkt in dieser Oberfläche angeordnet ist, wobei der ringförmige Bereich (46) der Niethülse wahlweise in eine eventuell vorhandene Nut des Schaftteils (18) hineinragt und gegebenenfalls im Bereich dieser Nut (96) eine konzentrisch zum Schaftteil (18) angeordnete konusförmige Ausrichthilfe (106 für ein anzubringendes Bauteil aufweist.

23. Verfahren zum Einsetzen eines Funktionsträgers nach einem der vorhergehenden Ansprüche 1 bis 19 in ein Bauteil (10), beispielsweise um ein Zusammenbauteil nach den Ansprüchen 20 bzw. 22 zu bilden,
**dadurch gekennzeichnet,**
**daß** das Kopfteil (20) des Funktionselements (12) durch ein im plattenförmigen Bauteil (10) ausgebildetes Loch (102) hindurch geführt wird oder in eine im Bauteil ausgebildete Vertiefung (38) hinein gedrückt wird und die Niethülse (14) anschließend in axialer Richtung des Funktionselements (12) auf die Hohlkehle (22) und auf das Kopfteil (20) des Funktionselements (12) zu bewegt wird, wodurch der rohrförmige Bereich (42) der Niethülse (14) durch die Hohlkehle (22) radial nach außen umgelenkt wird bis in eine Verankerungsstellung, in der das freie Ende (40) des rohrförmigen Bereiches (42) radial über das Kopfteil (20) des Funktionselementes hinausragt.

24. Verfahren nach Anspruch 23,
**dadurch gekennzeichnet,**
**daß** durch die Verformung des rohrförmigen Bereiches (42) der Niethülse (14) das freie Ende (40) des rohrförmigen Bereiches in die Lochwandung des Bauteils (10) hineingedrückt wird und somit das Ausziehen des Funktionsträgers aus der das Kopfteil (20) des Funktionselements (12) aufnehmenden Vertiefung (38) des Bauteils heraus verhindert.

25. Verfahren nach Anspruch 23 zum Einsetzen eines Funktionsträgers nach einem der vorhergehenden Ansprüche 2 bis 19,
**dadurch gekennzeichnet,**
**daß** durch die Verformung des rohrförmigen Bereiches (42) der Niethülse (14) eine das Material des Lochrandbereiches des Bauteils aufnehmende Nut (110) zwischen dem verformten rohrförmigen Bereich (42) und dem ringförmigen Bereich (46) ausgebildet wird.

26. Verfahren nach Anspruch 25,
**dadurch gekennzeichnet,**
**daß** der ringförmige Bereich (46) der Niethülse (14) in eine im Schaftteil (18) unmittelbar vor der Hohlkehle (22) ausgebildete Ringnut (96) hinein verformt wird.

27. Verfahren nach einem der vorhergehenden Ansprüche 23 bis 26,
**dadurch gekennzeichnet,**
**daß** die Niethülse (14) axial in Richtung auf die Hohlkehle (22) zu bewegt wird, während auf das Schaftteil (18) des Funktionselements (12) eine axiale Kraft in der entgegengesetzten Richtung erzeugt wird.

28. Verfahren nach einem der Ansprüche 25 oder 26,
**dadurch gekennzeichnet,**
**daß** der ringförmige Bereich (46) der Niethülse (14) ein Innengewinde (82) aufweist, das mit einem am Schaftteil (18) des Funktionselements (12) vorgesehenen Außengewinde (16) verschraubt ist und die radiale Verformung des rohrförmigen Bereiches der Niethülse durch eine relative Verdrehung zwischen der Niethülse (14) und dem Funktionselement (12) erzeugt wird.

29. Verfahren nach einem der vorhergehenden Ansprüche 25 bis 27,
**dadurch gekennzeichnet,**
**daß** ein mit einem Drucklager (68) versehenes Hilfswerkzeug (60) zur Verformung der Niethülse (14) verwendet wird, wobei das Drucklager (68) einen unteren Ring (70) aufweist, dessen den Wälzelementen abgewandte Stirnseite gegen die Stirnfläche (44) des ringförmigen Bereiches der Niethülse (14) drückt und dessen anderer Ring (72) an einer drehbaren Hülse (64) angebracht ist, welche ein Innengewinde (78) aufweist, das mit einem am Schaftteil (18) des Funktionselements vorgesehenen Außengewinde (16) zusammenarbeitet, wobei eine relative Verdrehung der mit dem Außengewinde des Schaftteils des Funktionselements zusammenarbeitenden Hülse (64) zu einer axialen Bewegung des Drucklagers (70) und der Niethülse (14) und hierdurch zu einer Verformung der Niethülse (14) an der Hohlkehle (22) des Funktionselements (12) führt.

30. Werkzeug zum Einsetzen eines Funktionsträgers nach einem der vorhergehenden Ansprüche 2 bis 19 in ein plattenförmiges Bauteil,
**dadurch gekennzeichnet,**
**daß** das Werkzeug zwei koaxiale, relativ zueinander drehbare Einrichtungen aufweist, wobei die innere Einrichtung (62) drehfest mit dem Schaftteil (18) des Funktionselements (12) bringbar ist und die äußere Einrichtung (64) drehfest mit der Niethülse (14) oder mit einem an die Niethülse (14) drückenden Hilfswerkzeug (70) in Verbindung gebracht werden kann, wobei entweder der ringförmige Bereich (46) der Niethülse (14) oder die äußere Einrichtung ein Innengewinde (78) aufweist, das mit einem am Schaftteil (18) des Funktionselements (12) vorgesehenen Außengewinde (16) zusammenarbeitet.

31. Werkzeug nach Anspruch 30,
**dadurch gekennzeichnet,**
**daß** das Hilfswerkzeug als Drucklager (68) ausgebildet ist, wobei das Drucklager einen unteren Ring (70) aufweist, dessen den Wälzelementen abgewandte Stirnseite gegen die Stirnfläche (44) des ringförmigen Bereiches (46) der Niethülse (14) drückt und dessen anderer Ring (72) an einer drehbaren Hülse (64) angebracht ist, welche ein Innengewinde (78) aufweist, das mit einem am Schaftteil (18) des Funktionselements (12) vorgesehenen Außengewinde (16) zusammenarbeitet, wobei eine relative Verdrehung der mit dem Außengewinde (16) des Schaftteils (18) des Funktionselements (12) zusammenarbeitenden Hülse (64) zu einer axialen Bewegung des Drucklagers (70) und der Niethülse (14) und hierdurch zu einer Verformung der Niethülse (14) an der Hohlkehle (22) des Funktionselements (12) führt.

32. Funktionsträger nach einem der vorhergehenden Ansprüche 1 bis 19,
**dadurch gekennzeichnet,**
**daß** der ringförmige Bereich (46) der Niethülse auf einer dem Bauteil (10) zugewandten Seite Nasen (90) und/oder Vertiefungen zur Verdrehsicherung aufweist.

## Claims

1. Function carrier (11) insertable from one side into a component, for example into a sheet metal part or into a plastic part, comprising a functional element (12) having shaft and head parts (18, 20) and a rivet sleeve (14),
**characterised in that**
the rivet sleeve (14) has a tubular deformation region (42) facing the head part (20) and is movable in the axial direction of the shaft part (18) along the shaft part and **in that** the functional element has, in the transition region between the shaft part (18) and the head part (20), a concave fillet (22) forming a sliding surface for the deformation of the rivet sleeve (14) and radially outwardly deforming the tubular deformable region (42) of the rivet sleeve.

2. Function carrier in accordance with claim 1,
**characterised in that**
the rivet sleeve (14) has a ring-like, at least substantially non-deformable region (46) remote from the head part (22).

3. Function carrier in accordance with claim 1,
**characterised in that**
the rivet sleeve (14) has a ring-like deformable region (46) remote from the head part (20).

4. Function carrier in accordance with any one of the preceding claims,
**characterised in that**
the end face (44) of the rivet sleeve (14) remote from the head part (20) is arranged perpendicular to the longitudinal axis (56) of the shaft part (18).

5. Function carrier in accordance with claim 4,
**characterised in that**
the said end face (44) of the rivet sleeve (14) is formed as a sliding surface.

6. Function carrier in accordance with claim 4,
**characterised in that**
the said end face (44) of the rivet sleeve (14) is formed for the transmission of rivet forces acting in the axial direction, but is not itself deformable or is at least substantially not deformable under the riveting forces.

7. Function carrier in accordance with claim 4,
**characterised in that**
the said end face (44) is designed to take up torques which turn the rivet sleeve (14) and bring about the deformation of the rivet sleeve (14).

8. Function carrier in accordance with claim 7,
**characterised in that**
the shaft part (18) of the functional element (12) has an outer thread (16), at least in the region adjacent to the concave fillet (22) and **in that** the rivet sleeve (14) has an internal thread (82) corresponding thereto.

9. Function carrier in accordance with any one of the preceding claims,
**characterised in that**
the shaft part (18) of the functional element (12) has a means (30) for the transmission of torques at the end remote from the head part (20).

10. Function carrier in accordance with claim 9,
**characterised in that**
the means is a spigot (30) having one or more side faces or longitudinal grooves.

11. Function carrier in accordance with claim 9,
**characterised in that**
the means has the form of a tool or wrench-receiving recess (34) formed in the free end of the shaft part (18), for example in the form of an internal hexagon.

12. Function carrier in accordance with any one of the preceding claims,
**characterised in that**
the shaft part (18) of the functional element (12) has a ring groove (96) at least in the region directly ahead of the concave fillet (22), and **in that** the ring-like region (46) of the rivet sleeve can be deformed into this ring groove (96).

13. Function carrier in accordance with any one of the preceding claims 1 to 6 or 9 to 12,
**characterised in that**
the concave fillet is provided with features (24:100) providing security against rotation, for example with a plurality of recesses and/or noses distributed in the peripheral direction, and **in that** the rivet sleeve (14) can be brought by the deformation into a form-fitted connection with these features (24; 100) providing security against rotation.

14. Function carrier in accordance with any one of the preceding claims,
**characterised in that**
the end face (44) of the head part (20) remote from the shaft part (18) is equipped with features providing security against rotation, for example noses providing security against rotation and/or recesses.

15. Function carrier in accordance with any one of the preceding claims 3 to 16 or 9 to 14,
**characterised in that**
the ring-like region (46) of the rivet sleeve (14) has, when considered in a radial section, at least substantially the shape of a right-angled triangle, the outer side (92) of which is arranged obliquely to the end face (44) of the rivet sleeve (14) remote from the head part (20) and to the inner face of the rivet sleeve (14) adjacent the shaft part (18).

16. Function carrier in accordance with any one of the preceding claims,
**characterised in that**
the tubular region (42) of the rivet sleeve (14) has an inner wall (94) which represents an axial continuation of the inner surface of the ring-like region (46) of the rivet sleeve (14).

17. Function carrier in accordance with any one of the preceding claims 1 to 14,
**characterised in that**
the tubular region (42) of the rivet sleeve (14) is at least substantially rectangular when considered in radial section, with the tubular region of the rivet sleeve (14) having an inner wall, which represents an axial continuation of the inner surface of the ring-like region (46) of the rivet sleeve and **in that** the ring-like region (46) of the rivet sleeve (14) forms a ring shoulder at its outer side with the adjacent side of the ring-like region (42).

18. Function carrier in accordance with any one of the preceding claims,
**characterised in that**
the functional element (12) is formed as a bolt element.

19. Function carrier in accordance with any one of the preceding claims 1 to 17,
**characterised in that**
the functional element (12) is formed as a nut element, i.e. at least the shaft part (18) is made hollow and this and/or the head part is formed with an internal thread (112) or can be provided with an internal thread (112).

20. Component assembly comprising a component (10), for example a sheet metal part or a plastic part, and a function carrier (11) in accordance with one or more of the preceding claims,
**characterised in that**
the plate-like component (10) has a drilling (102), the diameter of which corresponds at least substantially to that of the head part (20) and **in that** the deformed, tubular region (42) of the rivet sleeve (14), at the inner side, contacts the concave fillet (22) in at least substantially flush manner, projects radially outwardly beyond the edge of the head part (20) of the functional element (12) and forms a ring groove with the ring-like region (46) which accommodates the marginal region of the drilling of the component.

21. Component assembly comprising a component (10), for example a sheet metal part or a plastic part, and a function carrier in accordance with one or more of the preceding claims,
**characterised in that**
the component has a pot-like recess (38), the diameter of which corresponds at least substantially to that of the head part (20) and the base (58) of which is contacted by the end face (44) of the head part (20) remote from the shaft part (18) in a manner secured against rotation (36) and **in that** the deformed tubular region (42) of the rivet sleeve (14) at least substantially flushly contacts the concave fillet (22) at the inner side, projects radially outwardly beyond the edge of the head part of the functional element (12) and projects into the side wall of the pot-like recess (38) of the component (10) and is received there in a form-fitted manner.

22. Component assembly in accordance with claim 20 or claim 21,
**characterised in that**
the end face of the rivet sleeve (14) remote from the head part (20) is either arranged flush with the surface of the component (10) remote from the head part (20) or sunk into this surface, with the ring-like region (46) of the rivet sleeve optionally projecting into a possibly present groove of the shaft part (18) and optionally having, in the region of this groove (96), a conical alignment aid (106) arranged concentric to the shaft part (18) for a component to be mounted.

23. Method of inserting a function carrier in accordance with any one of the preceding claims 1 to 19 into a component (10), for example in order to form a component assembly in accordance with the claims 20 or 22,
**characterised in that**
the head part (20) of the functional element (12) is passed through a drilling (102) formed in the plate-like component (10) or is pressed into a recess (38) formed in the component and the rivet sleeve (14) is subsequently moved in the axial direction of the functional element (12) towards the concave fillet (22) and towards the head part (20) of the functional element (12), whereby the tubular region (42) of the rivet sleeve (14) is deflected radially outwardly by the concave fillet (22) up to and into an anchoring position in which the free end (40) of the tubular region (42) projects radially beyond the head part (20) of the functional element.

24. Method in accordance with claim 23,
**characterised in that**
the free end (40) of the tubular region is pressed into the drilling wall of the component (10) by the deformation of the tubular region (42) of the rivet sleeve (14) and thus prevents the pulling out of the function carrier out of the recess (38) of the component receiving the head part (20) of the functional element (12).

25. Method in accordance with claim 23 for the insertion of a functional carrier in accordance with any one of preceding claims 2 to 19,
**characterised in that**
through the deformation of the tubular region (42) of the rivet sleeve (14), a groove (110) is formed between the deformed tubular region (42) and the ring-like region (46) which receives the material of the marginal edge of the drilling of the component.

26. Method in accordance with claim 25,
**characterised in that**
the ring-like region (46) of the rivet sleeve (14) is deformed into a ring groove (96) formed in the shaft part (18) directly ahead of the concave fillet (22).

27. Method in accordance with any one of the preceding claims 23 to 26,
**characterised in that**
the rivet sleeve (14) is moved in the axial direction towards the concave fillet (22), while an axial force in the opposite direction is produced on the shaft part (18) of the functional element (12).

28. Method in accordance with any one of the claims 23 to 26,
**characterised in that**
the ring-like region (46) of the rivet sleeve (14) has an internal thread (82) which is screwed onto an external thread provided on the shaft part (18) of the functional element (12) and the radial deformation of the tubular region of the rivet sleeve is produced by a relative rotation between the rivet sleeve (14) and the functional element (12).

29. Method in accordance with any one of the preceding claims 23 to 27,
**characterised in that**
an auxiliary tool (60) provided with a thrust bearing (68) is used for the deformation of the rivet sleeve (14), with the thrust bearing (68) having a lower ring (70), the end face of which remote from the rolling elements presses against the end face (44) of the ring-like region of the rivet sleeve (14) and the other ring (72) of which is provided on a rotatable sleeve (64) which has an internal thread (78) which cooperates with an external thread (16) provided on the shaft part (18) of the functional element, with a relative rotation of the sleeve (64) which cooperates with the outer thread of the shaft part of the functional element leading to an axial movement of the thrust bearing (70) and of the rivet sleeve (14) and through this to a deformation of the rivet sleeve (14) at the concave fillet (22) of the functional element (12).

30. Tool for the insertion of a function carrier in accordance with any one of the preceding claims 2 to 19 into a plate-like component,
**characterised in that**
the tool has two coaxial devices rotatable relative to one another, with the inner device (62) being capable of being brought into a rotationally fixed connection with the shaft part (18) of the functional element (12) and the outer device (64) being capable of being brought into rotationally fixed connection with the rivet sleeve (14) or with an auxiliary tool (70) which presses onto the rivet sleeve (14), with either the ring-like region (46) of the rivet sleeve (14) or the outer device having an inner thread (78) which cooperates with an outer thread (16) provided on the shaft part (18) of the functional element (12).

31. Tool in accordance with claim 30,
**characterised in that**
the auxiliary tool is formed as a thrust bearing (68), with the thrust bearing having a lower ring (70), the end face of which remote from the rolling elements presses against the end face (44) of the ring-like region (46) of the rivet sleeve (14) and the other ring (72) of which is provided on a rotatable sleeve (64) which has an internal thread (78) which cooperates with an external thread (16) provided on the shaft part (18) of the functional element (12), with a relative rotation of the sleeve (64) which cooperates with the outer thread (16) of the shaft part (18) of the functional element (12) leading to an axial movement of the thrust bearing (70) and of the rivet sleeve (14) and through this to a deformation of the rivet sleeve (14) at the concave fillet (22) of the functional element (12).

32. Function carrier in accordance with any one of the preceding claims 1 to 19,
**characterised in that**
the ring-like region (46) of the rivet sleeve has noses (90) and/or recesses at a side confronting the component (10) to provide a security against rotation.

## Revendications

1. Support fonctionnel (11) pouvant être inséré dans une face d'un composant, par exemple dans un composant en tôle ou un composant en matière plastique, comprenant un élément fonctionnel (12) avec une partie de queue et une partie de tête (18, 20) et une douille de rivet (14), **caractérisé en ce que** la douille de rivet (14) présente une zone (42) tubulaire déformable orientée vers la partie de tête (20) et peut être déplacée dans le sens axial de la queue (18) le long de cette dernière, et **en ce que** l'élément fonctionnel, dans la zone de passage entre la queue (18) et la tête (20), présente une gorge (22) formant une surface de glissement pour déformer la douille de rivet (14) et déformant la zone (42) tubulaire déformable de la douille de rivet radialement vers l'extérieur.

2. Support fonctionnel selon la revendication 1, **caractérisé en ce que** la douille de rivet (14) présente une zone (46) annulaire opposée à la tête (22), qui du moins pour l'essentiel n'est pas déformable.

3. Support fonctionnel selon la revendication 1, **caractérisé en ce que** la douille de rivet (14) présente une zone (46) annulaire déformable opposée à la tête (20).

4. Support fonctionnel selon l'une quelconque des revendications précédentes, **caractérisé en ce que** la face frontale (44) de la douille de rivet (14) opposée à la tête (20) est disposée perpendiculairement à l'axe longitudinal (56) de la queue (18).

5. Support fonctionnel selon la revendication 4, **caractérisé en ce que** ladite face frontale (44) de la douille de rivet (14) est configurée en forme de surface de glissement.

6. Support fonctionnel selon la revendication 4, **caractérisé en ce que** ladite face frontale (44) de la douille de rivet (14) est configurée pour la transmission de forces de rivetage agissant dans le sens axial, mais n'est pas ou du moins pour l'essentiel pas déformable elle-même sous les forces de rivetage.

7. Support fonctionnel selon la revendication 4, **caractérisé en ce que** ladite face frontale (44) est conçue pour recevoir des couples de rotation tournant la douille de rivet (14) et réalisant la déformation de la douille de rivet (14).

8. Support fonctionnel selon la revendication 7, **caractérisé en ce que** la queue (18) de l'élément fonctionnel (12), du moins dans la zone voisine de la gorge (22), présente un filet mâle (16), et **en ce que** la douille de rivet (14) présente un filet femelle (82) correspondant à ce dernier.

9. Support fonctionnel selon l'une quelconque des revendications précédentes, **caractérisé en ce que** la queue (18) de l'élément fonctionnel (12), à l'extrémité opposée à la tête (20), présente un dispositif (30) pour la transmission de couples de rotation.

10. Support fonctionnel selon la revendication 9, **caractérisé en ce que** le dispositif est un tourillon (30) présentant plusieurs faces latérales ou rainures longitudinales.

11. Support fonctionnel selon la revendication 9, **caractérisé en ce que** le dispositif présente la forme d'un logement d'outil ou de clé (34) aménagé dans l'extrémité libre de la queue (18), par exemple la forme d'un six pans creux.

12. Support fonctionnel selon l'une quelconque des revendications précédentes, **caractérisé en ce que** la queue (18) de l'élément fonctionnel (12), du moins dans la zone immédiatement avant la gorge (22), présente une rainure annulaire (96), et **en ce que** la zone (46) annulaire de la douille de rivet peut être déformée dans cette rainure annulaire (96).

13. Support fonctionnel selon l'une quelconque des revendications précédentes 1 à 6 ou 9 à 12, **caractérisé en ce que** la gorge est pourvue de protections anti-torsion (24 :100), par exemple de plusieurs creux et/ou nez répartis dans la direction circonférentielle, et **en ce que** la douille de rivet (14) par la déformation peut être placée en contact avec ces protections anti-torsion (24 :100) par complémentarité de forme.

14. Support fonctionnel selon l'une quelconque des revendications précédentes, **caractérisé en ce que** la face frontale (44) de la tête (20) opposée à la queue (18) est pourvue de protections anti-torsion, par exemple de nez anti-torsion et/ou de creux.

15. Support fonctionnel selon l'une quelconque des revendications 3 à 16 ou 9 à 14, **caractérisé en ce que** la zone annulaire (46) de la douille de rivet (14), vue en coupe radiale, présente du moins pour l'essentiel la forme d'un triangle orthogonal dont la face extérieure (92) est disposée de façon oblique par rapport à la face frontale (44) de la douille de rivet (14) opposée à la tête (20) et par rapport à la face intérieure de la douille de rivet (14) orientée vers la queue (18).

16. Support fonctionnel selon l'une quelconque des revendications précédentes, **caractérisé en ce que** la zone tubulaire (42) de la douille de rivet (14) présente une paroi intérieure (94), qui est un prolongement axial de la face intérieure de la zone annulaire (46) de la douille de rivet (14).

17. Support fonctionnel selon l'une quelconque des revendications 1 à 14, **caractérisé en ce que** la zone tubulaire (42) de la douille de rivet (14), vue en coupe radiale, est du moins sensiblement rectangulaire, la zone tubulaire de la douille de rivet (14) présentant une paroi intérieure, qui est un prolongement axial de la face intérieure de la zone annulaire (46) de la douille de rivet, et **en ce que** la zone annulaire (46) de la douille de rivet (14) forme sur sa face extérieure un épaulement annulaire avec la face adjacente de la zone annulaire (42).

18. Support fonctionnel selon l'une quelconque des revendications précédentes, **caractérisé en ce que** l'élément fonctionnel (12) est configuré comme élément de boulon.

19. Support fonctionnel selon l'une quelconque des revendications précédentes 1 à 17, **caractérisé en ce que** l'élément fonctionnel (12) est configuré comme élément d'écrou, c'est-à-dire qu'au moins la queue (18) est creuse et que celle-ci et/ou la tête est pourvue ou peut être pourvue d'un filet femelle (112).

20. Pièce d'assemblage comprenant un composant (10), par exemple un composant en tôle ou un composant en matière plastique, et un support fonctionnel (11) selon l'une ou plusieurs des revendications précédentes, **caractérisée en ce que** le composant (10) en forme de plaque présente un orifice (102) dont le diamètre correspond du moins pour l'essentiel à celui de la tête (20), et **en ce que** la zone tubulaire (42) déformée de la douille de rivet (14), sur la face intérieure, est appliquée du moins pour l'essentiel de façon affleurante contre la gorge (22), qu'elle fait saillie radialement vers l'extérieur au-delà du bord de la tête (20) de l'élément fonctionnel (12) et qu'elle forme, avec la zone annulaire (46), une rainure annulaire recevant la zone marginale perforée du composant.

21. Pièce d'assemblage comprenant un composant (10), par exemple un composant en tôle ou un composant en matière plastique, et un support fonctionnel selon l'une ou plusieurs des revendications précédentes, **caractérisée en ce que** le composant présente un creux (38) en forme de pot, dont le diamètre correspond du moins pour l'essentiel à celui de la tête (20), et sur le fond (58) duquel est appliquée de façon protégée en torsion (36) , la face frontale (44) de la tête (20) opposée à la queue (18), et **en ce que** la zone tubulaire (42) déformée de la douille de rivet (14), sur la face intérieure, est appliquée du moins pour l'essentiel de façon affleurante contre la gorge (22), qu'elle fait saillie radialement vers l'extérieur au-delà du bord de la tête de l'élément fonctionnel (12) pour entrer dans la paroi latérale du creux (38) en forme de pot du composant (10) où elle est logée par complémentarité de forme.

22. Pièce d'assemblage selon la revendication 20 ou 21, **caractérisée en ce que** la face frontale de la douille de rivet (14) opposée à la tête (20) est disposée soit de façon affleurante avec la surface du composant (10) opposée à la tête (20) soit noyée dans cette surface, la zone annulaire (46) de la douille de rivet pouvant faire saillie dans une rainure de la queue (18) éventuellement prévue et, éventuellement, présente dans la zone de cette rainure (96) une aide à l'alignement (106) conique disposée de façon concentrique par rapport à la queue (18) pour un composant à monter.

23. Procédé de mise en place d'un support fonctionnel selon l'une quelconque des revendications précédentes 1 à 19 dans un composant (10), par exemple pour constituer une pièce d'assemblage selon les revendications 20 ou 22, **caractérisé en ce que** la tête (20) de l'élément fonctionnel (12) est guidée à travers un orifice (102) aménagé dans le composant (10) en forme de plaque ou pressée dans un creux (38) prévu dans le composant, et **en ce que** la douille de rivet (14) est ensuite déplacée dans le sens axial de l'élément fonctionnel (12) vers la gorge (22) et vers la tête (20) de l'élément fonctionnel (12), ce qui dévie la zone tubulaire (42) de la douille de rivet (14) par la gorge (22) radialement vers l'extérieur jusqu'à une position d'ancrage, dans laquelle l'extrémité libre (40) de la zone tubulaire (42) fait saillie radialement de la tête (20) de l'élément fonctionnel.

24. Procédé selon la revendication 23, **caractérisé en ce que** par la déformation de la zone tubulaire (42) de la douille de rivet (14), l'extrémité libre (40) de la zone tubulaire est pressée dans la paroi perforée du composant (10), ce qui empêche l'extraction du support fonctionnel du creux (38) du composant recevant la tête (20) de l'élément fonctionnel (12).

25. Procédé selon la revendication 23 pour la mise en place d'un support fonctionnel selon l'une quelconque des revendications précédentes 2 à 19, **caractérisé en ce que** par la déformation de la zone tubulaire (42) de la douille de rivet (14) est configurée une rainure (110) recevant le matériau de la zone marginale perforée du composant entre la zone tubulaire (42) déformée et la zone annulaire (46).

26. Procédé selon la revendication 25, **caractérisé en ce que** la zone annulaire (46) de la douille de rivet (14) est déformée dans une rainure annulaire (96) prévue dans la queue (18) immédiatement avant la gorge (22).

27. Procédé selon l'une quelconque des revendications précédentes 23 à 26, **caractérisé en ce que** la douille de rivet (14) est déplacée axialement en direction de la gorge (22), tandis que sur la queue (18) de l'élément fonctionnel (12) une force axiale est exercée dans le sens opposé.

28. Procédé selon l'une quelconque des revendications 25 ou 26, **caractérisé en ce que** la zone annulaire (46) de la douille de rivet (14) présente un filet femelle (82) vissé sur un filet mâle (16) prévu sur la queue (18) de l'élément fonctionnel (12), et **en ce que** la déformation radiale de la zone tubulaire de la douille de rivet est générée par une torsion relative entre la douille de rivet (14) et l'élément fonctionnel (12).

29. Procédé selon l'une quelconque des revendications précédentes 25 à 27, **caractérisé en ce que** pour la déformation de la douille de rivet (14), on utilise un outil auxiliaire (60) pourvu d'un palier de butée (68), le palier de butée (68) présentant une bague inférieure (70) dont la face frontale opposée aux éléments de roulement s'appuie contre la face frontale (44) de la zone annulaire de la douille de rivet (14), et dont l'autre bague (72) est disposée sur une douille (64) rotative présentant un filet femelle (78) qui coopère avec un filet mâle (16) prévu sur la queue (18) de l'élément fonctionnel, une torsion relative de la douille (64) coopérant avec le filet mâle de la queue de l'élément fonctionnel conduisant à un mouvement axial du palier de butée (70) et de la douille de rivet (14) et par conséquent à une déformation de la douille de rivet (14) sur la gorge (22) de l'élément fonctionnel (12).

30. Outil pour la mise en place d'un support fonctionnel selon l'une quelconque des revendications précédentes 2 à 19 dans un composant en forme de plaque, **caractérisé en ce que** l'outil présente deux dispositifs coaxiaux rotatifs l'un par rapport à l'autre, le dispositif intérieur (62) pouvant être immobilisé en rotation avec la queue (18) de l'élément fonctionnel (12), et le dispositif extérieur (64) pouvant être immobilisé en rotation avec la douille de rivet (14) ou mis en relation avec un outil auxiliaire (70) s'appuyant contre la douille de rivet (14), soit la zone annulaire (46) de la douille de rivet (14) soit le dispositif extérieur présentant un filet femelle (78) qui coopère avec un filet mâle (16) prévu sur la queue (18) de l'élément fonctionnel (12).

31. Outil selon la revendication 30, **caractérisé en ce que** l'outil auxiliaire est configuré comme palier de butée (68), le palier de butée présentant une bague inférieure (70) dont la face frontale opposée aux éléments de roulement s'appuie contre la face frontale (44) de la zone annulaire (46) de la douille de rivet (14), et dont l'autre bague (72) est disposée sur une douille (64) rotative présentant un filet femelle (78) qui coopère avec un filet mâle (16) prévu sur la queue (18) de l'élément fonctionnel (12), une torsion relative de la douille (64) coopérant avec le filet mâle (16) de la queue (18) de l'élément fonctionnel (12) conduisant à un mouvement axial du palier de butée (70) et de la douille de rivet (14) et par conséquent à une déformation de la douille de rivet (14) sur la gorge (22) de l'élément fonctionnel (12).

32. Support fonctionnel selon l'une quelconque des revendications précédentes 1 à 19, **caractérisé en ce que** la zone annulaire (46) de la douille de rivet, sur une face orientée vers le composant (10), présente des nez (90) et/ou des creux pour la protection anti-torsion.
